# EUROPEAN PATENT APPLICATION

(11) **EP 4 844 489 A1**
(43) Date of publication of application: **25.11.2026**
(21) Application number: 26177187.7
(22) Date of filing: 07.05.2026
(51) Int. Cl.: G03G 15/08, G03G 15/00, G03G 21/18, G06F 21/44, G06F 21/73, H04L 9/32, H04L 9/40, H04N 1/00

(54) **DEVICE DETACHABLY ATTACHABLE TO IMAGE FORMING APPARATUS, METHOD FOR REMANUFACTURING DEVICE, COMPUTER PROGRAM, AND IMAGE FORMING APPARATUS**

(30) Priority: 22.05.2025 JP 2025085777
(71) Applicant: Canon Kabushiki Kaisha, Tokyo 146-8501 (JP)
(72) Inventor: HOJO, Yuta, Tokyo, 146-8501 (JP); ISHIBASHI, Ren, Tokyo, 146-8501 (JP)
(74) Representative: Canon Europe Limited

(57) **Abstract**

A device (10) detachably attachable to an image forming apparatus (100) includes a memory (20, 30), a connection interface (21), and a controller (27, 37, 47). The memory has a first storage area (25) permitting external read/write access and a second storage area (26) prohibiting external reading. During remanufacturing, the controller receives remanufacture data and an identity-based authentication private key, storing them in the first and second storage areas, respectively. Upon attachment to the image forming apparatus, the controller receives an authentication request, generates a response using the stored private key, and transmits the response to the image forming apparatus.

## Description

### TECHNICAL FIELD

The present disclosure relates to a device detachably attachable to an image forming apparatus, a method for remanufacturing the device, a computer program, and an image forming apparatus.

### BACKGROUND

An image forming apparatus such as a copier, printer, facsimile receiver, or multifunction peripheral forms images on sheets using a developer, such as toner or ink, and consumable components such as a photosensitive drum. Such consumable elements are housed inside a device that is detachably attached to the image forming apparatus. When the developer inside the device is exhausted or the remaining service life of elements inside the device is exhausted, a user removes the old device and attaches a new device to the image forming apparatus. International Publication No. WO 2022/173444 discloses a system in which a tamper-resistant memory chip is installed in a device that is attached to an image forming apparatus, and configuration data for causing the image forming apparatus to execute an operation matching the characteristics of the device is written to the memory chip of the device.

Due to increasing environmental awareness, recent years have seen efforts being made to design devices in advance so that the devices, after being used, can be reused in image forming apparatuses without being discarded. For example, a company that remanufactures devices for reuse collects a used device, refills the used device with a developer, replaces components that have been consumed, and updates configuration data in a memory chip of the device in accordance with the characteristics of the device after remanufacture. In the system disclosed in International Publication No. WO 2022/173444, in order to guarantee that the image forming apparatus operates appropriately when the device is reused, configuration data for the device after remanufacture is written to the memory chip by an apparatus authenticated by a cloud service, together with a digital signature for data verification.

### SUMMARY

However, if operations during device reuse are guaranteed based on verification of a static digital signature as in the system disclosed in International Publication No. WO 2022/173444, sufficient protection cannot be provided against malicious activities involving duplication or analysis of the digital signature.

In view of the foregoing, the present disclosure aims to enhance reuse-related safety of a device that is detachably attachable to an image forming apparatus.

The present disclosure in its first aspect provides a device as specified in claim 1. Optional features are specified in claim 2 to 15.

The present disclosure in its second aspect provides a method as specified in claim 16.

The present disclosure in its third aspect provides a non-transitory computer-readable storage medium as specified in claim 17.

The present disclosure in its fourth aspect provides an image forming apparatus as specified in claim 18.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a schematic diagram relating to a schematic configuration of a cartridge authentication system according to one embodiment.
FIG. 2 is a schematic cross-sectional view illustrating an example of an internal physical configuration of a cartridge.
FIG. 3 is a schematic cross-sectional view illustrating an example of an internal physical configuration of a printer to which the cartridge is attached.
FIG. 4 is a schematic perspective view illustrating an example of an appearance of a connection interface of a remanufacturing apparatus.
FIG. 5 is a diagram for describing an example of a configuration of storage areas of a cartridge memory according to a first embodiment.
FIG. 6 is a block diagram illustrating an example of a detailed configuration of a master generation apparatus according to the first embodiment.
FIG. 7 is a block diagram illustrating a connection relationship between the cartridge, the remanufacturing apparatus, and a management server during remanufacturing of the cartridge in the first embodiment, and an example of configurations of the respective apparatuses in the first embodiment.
FIG. 8 is a sequence diagram illustrating an example of a flow of write processing executed during remanufacturing of the cartridge in the first embodiment.
FIG. 9 is a block diagram illustrating an example of a configuration of control functions of the printer having the cartridge attached thereto in the first embodiment.
FIG. 10 is a sequence diagram illustrating an example of a flow of cartridge authentication processing executed between the cartridge and the printer in the first embodiment.
FIG. 11 is a diagram for describing an example of a configuration of storage areas of the cartridge memory according to a second embodiment.
FIG. 12 is a block diagram illustrating an example of a detailed configuration of the master generation apparatus according to the second embodiment.
FIG. 13 is a block diagram illustrating a connection relationship between the cartridge, the remanufacturing apparatus, and the management server during remanufacturing of the cartridge in the second embodiment, and an example of configurations of the respective apparatuses in the second embodiment.
FIG. 14 is a diagram for describing overwriting of certificate data in the second embodiment.
FIG. 15 is a sequence diagram illustrating an example of a flow of write processing executed during remanufacturing of the cartridge in the second embodiment.
FIG. 16 is a block diagram illustrating an example of a configuration of the control functions of the printer having the cartridge attached thereto in the second embodiment.
FIG. 17 is a sequence diagram illustrating an example of a flow of cartridge authentication processing executed between the cartridge and the printer in the second embodiment.
FIG. 18 is a block diagram illustrating a connection relationship between the cartridge, the remanufacturing apparatus, and the management server during remanufacturing of the cartridge in a third embodiment, and an example of configurations of the respective apparatuses in the third embodiment.
FIG. 19 is a sequence diagram illustrating an example of a flow of write processing executed during remanufacturing of the cartridge in the third embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Each of the embodiments of the present invention described below can be implemented solely or as a combination of a plurality of the embodiments or features thereof where necessary or where the combination of elements or features from individual embodiments in a single embodiment is beneficial. Furthermore, in the attached drawings, the same reference numerals are given to the same or similar configurations, and redundant description thereof is omitted.

### 1. Overview of System

### 1-1. Overall Configuration

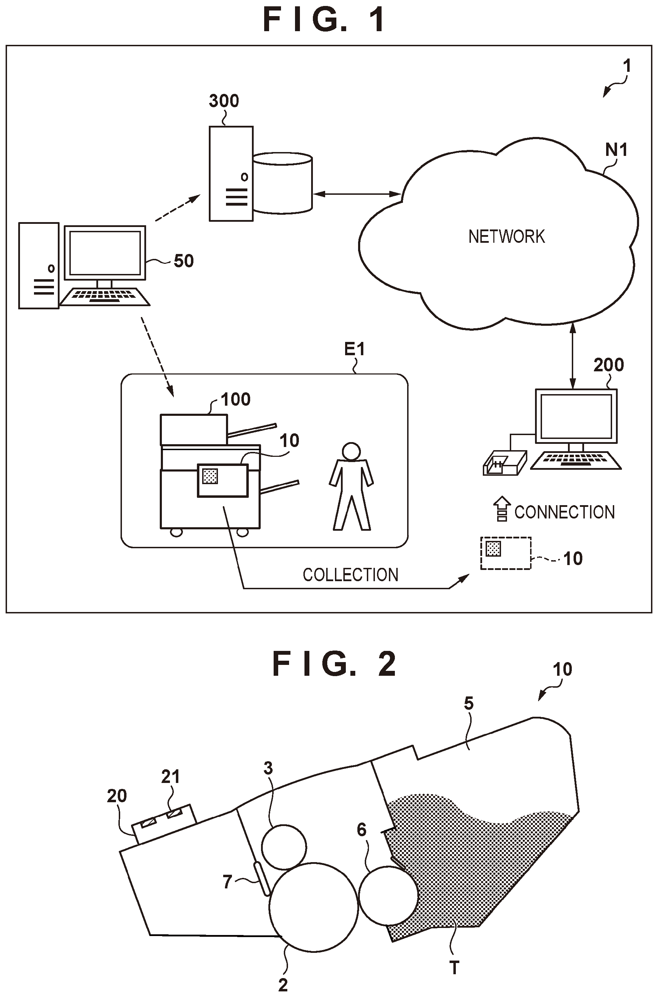

FIG. 1 is a schematic diagram relating to a schematic configuration of a cartridge authentication system 1 according to one embodiment. With reference to FIG. 1, the cartridge authentication system 1 includes a cartridge 10, a master generation apparatus 50, a printer 100, a remanufacturing apparatus 200, and a management server 300.

The cartridge 10 is a device that is detachably attachable to the printer 100. The printer 100 operates in a state in which the cartridge 10 is attached thereto. In the present embodiment, description will be mainly provided of an example in which the cartridge 10 is a process cartridge. In another embodiment, the cartridge 10 may be a cartridge of another type, such as a toner cartridge or an ink cartridge. Note that the technique according to the present disclosure is also applicable to devices of other types, such as a replenishing pack that is temporarily attached to an image forming apparatus for developer replenishment.

The master generation apparatus 50 is an information processing apparatus that generates a pair of a master private key (master key) and a master public key (system parameter) for the later-described identity-based cryptography scheme. The master generation apparatus 50 is operated by a manufacturer of the cartridge 10 and the printer 100. Note that the master generation apparatus 50 may be part of the later-described management server 300.

The printer 100 is an image forming apparatus that is installed in a user environment E1. In the present embodiment, description will be mainly provided of an example in which the printer 100 is a laser printer that forms images on sheets by electrophotography. In another embodiment, the printer 100 may be a printer of another type, such as an inkjet printer. The printer 100 may be a monochrome printer or a color printer. Note that the technique according to the present disclosure is also applicable to image forming apparatuses of other types, such as a copier or a multifunction peripheral.

The remanufacturing apparatus 200 is an apparatus that writes data to the cartridge 10 during remanufacturing of the cartridge 10. The remanufacturing apparatus 200 is typically used by a remanufacturer. The remanufacturer may be the same company as the manufacturer of the cartridge 10 and the printer 100. Otherwise, the remanufacturer may be a different company that carries out work for remanufacturing the cartridge 10 with permission from the manufacturer. By work for remanufacturing the cartridge 10 being carried out with legitimate permission from the manufacturer, user confidence in the quality of the cartridge 10 improves and the purchase of remanufactured cartridges is promoted. The manufacturer grants permission for remanufacture to one or more companies that can carry out appropriate work, so that low-quality remanufactured cartridges do not induce user dissatisfaction due to damage to printers and operation failures. For example, the remanufacturing apparatus 200 may be a general-purpose information processing apparatus such as a personal computer (PC), or may be a dedicated apparatus for the writing of information to the cartridge 10. The remanufacturing apparatus 200 includes the later-described connection interface for connection with the cartridge 10. The remanufacturing apparatus 200 is also connected to a network N1.

The network N1 may be the Internet, a cloud network, a private network, or an appropriate combination thereof.

The management server 300 is a server apparatus for managing the remanufacture of the cartridge 10. Typically, the management server 300 is operated by the manufacturer of the printer 100 (or a third party commissioned by the manufacturer). As described in detail later, the management server 300 operates as a private-key generation station for identity-based cryptography, and serves as the root of trust of the cartridge 10. For example, the management server 300 may be implemented as a web server, a cloud server, or an application server. The management server 300 is connected to the network N1. The remanufacturing apparatus 200 can communicate with the management server 300 via the network N1.

### 1-2. Overview of Cartridge

FIG. 2 is a schematic cross-sectional view illustrating an example of an internal physical configuration of the cartridge 10. With reference to FIG. 2, the cartridge 10 includes a photoreceptor 2, a charge roller 3, a toner container 5, a developing roller 6, a cleaner 7, and a cartridge memory 20. The photoreceptor 2, the charge roller 3, the developing roller 6, and the cleaner 7 are components that are driven by the printer 100 in an image forming operation of the printer 100. The toner container 5 houses toner T as a developer. The toner T is supplied to the printer 100 when the printer 100 forms a toner image. The cartridge memory 20 stores various types of information therein, such as identification information identifying the cartridge 10, and characteristics information indicating the characteristics of elements involved in the image forming operation. The cartridge memory 20 has a pair of connection terminals (connection interface) 21 for electrical connection with external apparatuses. The cartridge memory 20 is connected to the printer 100 via the connection terminals 21 when the cartridge 10 is used, and is connected to the remanufacturing apparatus 200 via the connection terminals 21 during remanufacturing of the cartridge 10. Further description of the configuration of the information stored by the cartridge memory 20 will be provided later.

### 1-3. Overview of Printer

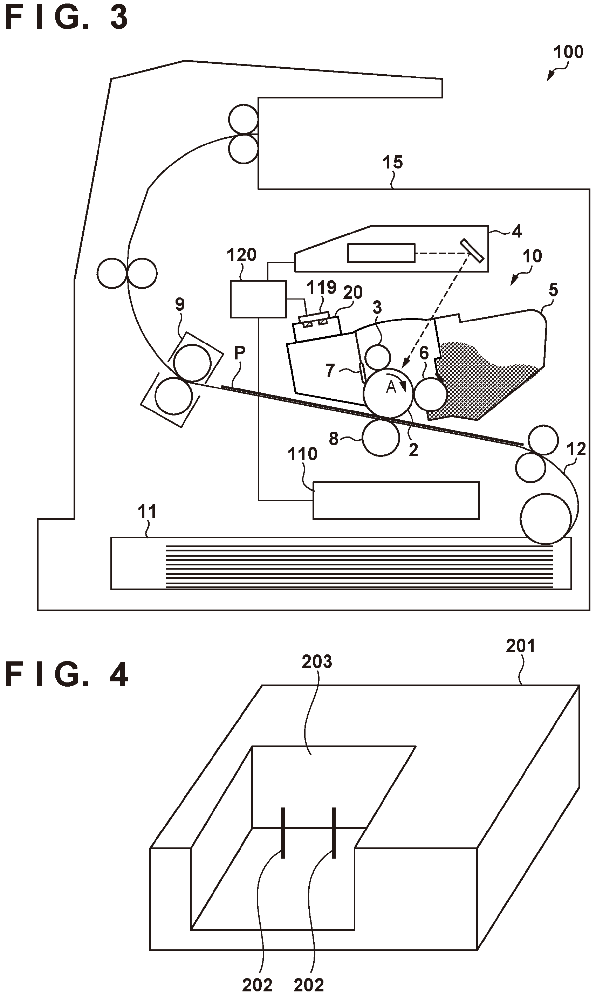

FIG. 3 is a schematic cross-sectional view illustrating an example of an internal physical configuration of the printer 100 having the cartridge 10 attached thereto. With reference to FIG. 3, the printer 100 includes an exposure unit 4, a transfer roller 8, a fixing unit 9, a cassette 11, a conveyance path 12, a discharge tray 15, a controller 110, connection terminals 119, and an engine control unit 120.

The photoreceptor 2 is an image carrier, and is driven to rotate in the direction of arrow A during the image forming operation. The charge roller 3 receives application of a charging voltage, and uniformly charges the surface of the photoreceptor 2. The exposure unit 4 forms an electrostatic latent image on the surface of the photoreceptor 2 by exposing the surface of the photoreceptor 2 to laser light in accordance with input image data from the engine control unit 120. The developing roller 6 receives application of a developing voltage, and develops the electrostatic latent image and forms a toner image on the surface of the photoreceptor 2 by supplying the toner T housed in the toner container 5 to the photoreceptor 2.

The cassette 11 houses a stack of sheets. In the image forming operation, sheets P are fed onto the conveyance path 12 one by one from the stack of sheets in the cassette 11. Each sheet P is conveyed along the conveyance path 12 by a plurality of conveyance rollers, and arrives at a transfer position at which the transfer roller 8 is disposed. The transfer roller 8 receives application of a transfer voltage, and transfers the toner image formed on the surface of the photoreceptor 2 onto the sheet P. The cleaner 7 removes the toner remaining on the surface of the photoreceptor 2. The fixing unit 9 fixes the toner image onto the sheet P by applying heat and pressure to the sheet P. The sheet P having passed through the fixing unit 9 is discharged onto the discharge tray 15.

In cooperation with the engine control unit 120, the controller 110 controls the overall operations of the printer 100 described above. The engine control unit 120 is connected, via the connection terminals 119, to the cartridge 10 attached to the printer 100. The engine control unit 120 controls the image forming operation of the printer 100 based on the characteristics indicated by the characteristics information read from the cartridge 10. For example, image forming conditions such as the charging voltage, developing voltage, transfer voltage, and process speed may be determined based on the later-described component characteristics information. Furthermore, the residual toner amount may be determined based on the later-described toner characteristics information. Further description of the detailed configurations of the controller 110 and the engine control unit 120 will be provided later.

Note that, while description will be mainly provided of an example in which the cartridge 10 is connected to the engine control unit 120 in a wired fashion via connection terminals, the cartridge 10 may be wirelessly connected to the engine control unit 120 via an antenna, for example, in another embodiment. The same applies to the connection between the cartridge 10 and the remanufacturing apparatus 200.

### 1-4. Remanufacturing of Cartridge

As the printer 100 repeats the image forming operation, the toner inside the cartridge 10 is exhausted, or the remaining service life of one or more components of the cartridge 10 is exhausted due to the components being consumed (e.g., a roller wears out). The user then removes the cartridge 10 from the printer 100 and attaches a new cartridge to the printer 100. The used cartridge 10 is collected by the remanufacturer. In FIG. 1, the cartridge 10 collected by the remanufacturer is indicated by a dashed line.

The remanufacturer carries out work for remanufacturing, such as, for example, the cleaning of components, the refilling of the toner container 5 with toner, and the replacement of consumed components. Furthermore, the remanufacturer connects a connection interface 201 of the remanufacturing apparatus 200 to the cartridge 10. FIG. 4 is a schematic perspective view illustrating an example of an appearance of the connection interface 201. With reference to FIG. 4, the connection interface 201 includes a pair of connection terminals 202 disposed in a recess 203 capable of receiving the cartridge memory 20. When the cartridge memory 20 is set inside the recess 203, communication between the remanufacturing apparatus 200 and the cartridge memory 20 is enabled as a result of the connection terminals 202 coming into electrical contact with the connection terminals 21 of the cartridge memory 20.

The remanufacturing apparatus 200 acquires remanufacture data including characteristics information indicating the characteristics of elements of the cartridge 10 after remanufacture, etc., based on input by the remanufacturer, for example, and writes the acquired remanufacture data to the cartridge memory 20. Furthermore, the remanufacturing apparatus 200 requests the management server 300 to generate a private key with which verification that the remanufacture data has been written by a legitimate remanufacturer can be performed later, and writes, to the cartridge memory 20, the private key provided by the management server 300. In the following description, this private key generated by the management server 300 will be referred to as an authentication private key.

When the cartridge 10 after remanufacture (hereinafter also referred to as "remanufactured cartridge 10") is attached to the printer 100, the printer 100 transmits a first authentication request to the cartridge 10. The cartridge 10 generates a first authentication response based on the first authentication request and the authentication private key written to the cartridge memory 20, and transmits the generated first authentication response to the printer 100. If the authentication of the cartridge 10 based on the first authentication response received from the cartridge 10 is successful, the printer 100 uses the remanufacture data read from the cartridge memory 20 to execute the image forming operation under image forming conditions matching the characteristics of the remanufactured cartridge 10. Note that, as a matter of course, the printer to which the cartridge 10 after remanufacture is attached may differ from the printer to which the cartridge 10 was attached prior to remanufacture.

Starting from the next section, description will be provided of several embodiments for enhancing the reuse-related security of the cartridge 10 in the above-described cartridge authentication system 1.

### 2. First Embodiment

### 2-1. Example Configuration of Cartridge Memory

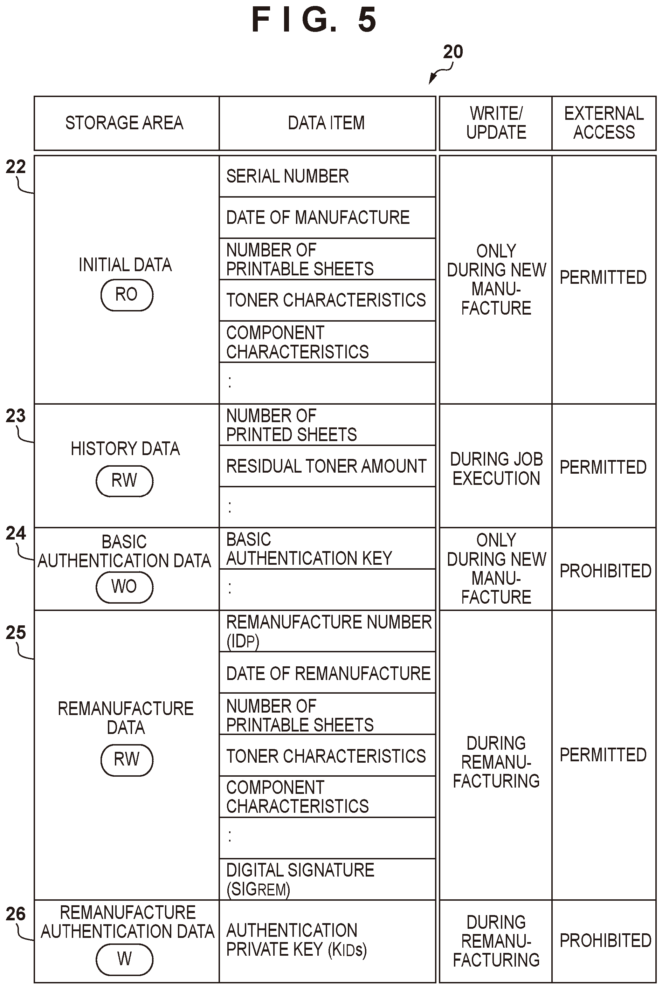

FIG. 5 is a diagram for describing an example of a configuration of storage areas of the cartridge memory 20 according to a first embodiment. The cartridge memory 20 may be a non-volatile memory of an appropriate type, and, for example, may be an electrically erasable programmable read-only memory (EEPROM). With reference to FIG. 5, the cartridge memory 20 includes an initial-data area 22, a history-data area 23, a basic-authentication-data area 24, a remanufacture-data area 25, and a remanufacture-authentication-data area 26.

The initial-data area (third storage area) 22 is a storage area to which is written in advance initial data determined by the manufacturer for the cartridge 10 when new (i.e., prior to remanufacture). The initial-data area 22 is read-only ("RO"), meaning that, after the initial data is written to the initial-data area 22 when the cartridge 10 is newly manufactured, the writing of data to the initial-data area 22 is prohibited while the reading of data from the initial-data area 22 is permitted. The initial-data area 22 is configured to be accessible from external apparatuses. In the example in FIG. 5, the initial data includes the following data items.
·Serial Number
·Date of Manufacture
·Number of Printable Sheets
·Toner Characteristics Information
·Component Characteristics Information

The serial number is a unique number provided to the individual cartridge 10. The date of manufacture indicates the year, month, and date when the cartridge 10 was manufactured. The serial number or the combination of the serial number and the date of manufacture may be used as initial identification information uniquely identifying the individual cartridge 10 when new. The number of printable sheets indicates an estimated value of the number of sheets that can be printed using the cartridge 10 when new, and the value thereof may be determined in accordance with the amount of toner with which the toner container 5 was filled when the cartridge 10 was newly manufactured. The toner characteristics information is information indicating the characteristics of the toner housed in the cartridge 10. For example, the toner characteristics information may include a parameter (e.g., "Black") indicating the color component of the toner stored in the cartridge 10, or a parameter indicating toner type. The component characteristics information is information indicating the characteristics of the components constituting the cartridge 10. For example, the component characteristics information may include a parameter indicating one or more among the optimal charging voltage, developing voltage, and transfer voltage.

The history-data area 23 is a storage area storing therein history data that can be updated when an image forming job is executed using the cartridge 10. The history-data area 23 is rewritable ("RW"), meaning that the reading and writing of data from and to the history-data area 23 is permitted. The history-data area 23 is configured to be accessible from external apparatuses. In the example in FIG. 5, the history data includes the following data items.
·Number of Printed Sheets
·Residual Toner Amount

The number of printed sheets indicates the cumulative number of sheets that have been used for image forming. The residual toner amount indicates the amount of toner estimated to be remaining inside the toner container 5 as a percentage relative to the toner filling amount when the cartridge 10 was newly manufactured or remanufactured, for example.

The basic-authentication-data area 24 is a storage area to which is written in advance authentication data for basic authentication that is executed upon attachment of the cartridge 10 to the printer 100, regardless of whether the cartridge 10 is new or has been remanufactured. The basic-authentication-data area 24 is write-once ("WO"). This means that, once the authentication data is written to the basic-authentication-data area 24 when the cartridge 10 is newly manufactured, the writing of data to the basic-authentication-data area 24 is prohibited, and only the reading of data from within the cartridge 10 is permitted. The basic-authentication-data area 24 is configured to be inaccessible from external apparatuses. In the example in FIG. 5, the authentication data written to the basic-authentication-data area 24 includes a basic authentication key determined by the manufacturer of the cartridge 10. The basic authentication key is used to generate a basic authentication response (second authentication response) in response to a basic authentication request (second authentication request) that is received from the printer 100 for the basic authentication. The basic authentication key may be an encryption key or a simpler password.

The remanufacture-data area (first storage area) 25 is a storage area to which is written remanufacture data acquired by the remanufacturing apparatus 200 during remanufacturing of the cartridge 10. The remanufacture-data area 25 is rewritable ("RW"), meaning that the reading and writing of data from and to the remanufacture-data area 25 is permitted. The remanufacture-data area 25 is configured to be accessible from external apparatuses. In the example in FIG. 5, the remanufacture data includes the following data items.
·Remanufacture Number
·Date of Remanufacture
·Number of Printable Sheets
·Toner Characteristics Information
·Component Characteristics Information

The remanufacture number is a number that is determined by the remanufacturer and assigned to the remanufactured cartridge 10. The date of remanufacture indicates the year, month, and date when the cartridge 10 was remanufactured. While not illustrated in FIG. 5, the remanufacture data may further include an ordinal number indicating a remanufacturing count. The number of printable sheets indicates an estimated value of the number of sheets that can be printed using the remanufactured cartridge 10, and the value thereof may be determined in accordance with the amount of toner with which the toner container 5 was filled when the cartridge 10 was remanufactured. The toner characteristics information is information indicating the characteristics of the toner housed in the remanufactured cartridge 10. The component characteristics information is information indicating the characteristics of the components constituting the remanufactured cartridge 10. As illustrated in FIG. 5, a digital signature SIGREM proving the authenticity of the remanufacture data may be further written to the remanufacture-data area 25. The data in the remanufacture-data area 25 is updated in accordance with the characteristics of the new remanufactured cartridge 10 during remanufacturing performed for the second and subsequent times.

At least part of the remanufacture data is used as unique data at least partially constituting identification information IDp unique to the remanufactured cartridge 10. In the present embodiment, the remanufacture number alone is used as the unique data, and the remanufacture number independently constitutes the identification information IDp. In another example, a combination of the remanufacture number and another data item included in the remanufacture data (e.g., one or both of the date of remanufacture and the remanufacturing count) may be used as the unique data. The identification information IDp may be constituted by such unique data alone, or may be constituted from a combination of unique data included in the remanufacture data and one or more data items included in the initial data (e.g., the serial number and date of manufacture).

The remanufacture-authentication-data area (second storage area) 26 is a storage area to which is written an authentication private key KIDs, which is generated by the management server 300 during remanufacturing of the cartridge 10 and received from the remanufacturing apparatus 200. The remanufacture-authentication-data area 26 is writable ("W"). This means that, while writing of data to the remanufacture-authentication-data area 26 is permitted, reading of data from the remanufacture-authentication-data area 26 by external apparatuses is prohibited. The authentication private key KIDs is used to generate a remanufacture authentication response (first authentication response) to a remanufacture authentication request (first authentication request) received from the printer 100 for authentication of the remanufactured cartridge 10 (hereinafter "remanufacture authentication"). The remanufacture authentication based on the remanufacture authentication request and the remanufacture authentication response will be described in detail later.

### 2-2. Example Configuration of Master Generation Apparatus

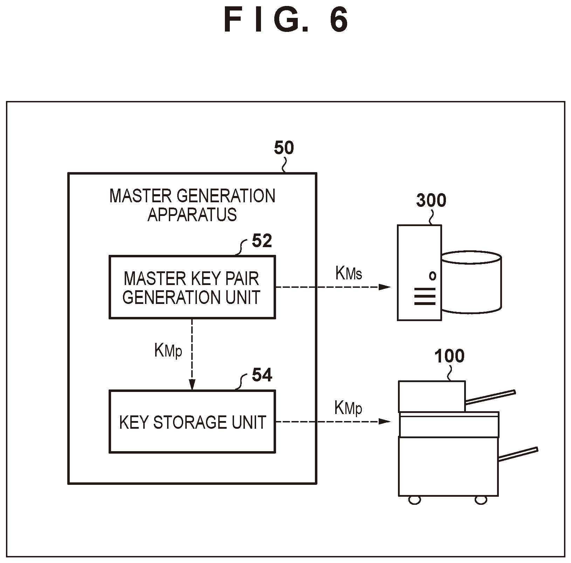

FIG. 6 illustrates an example of a detailed configuration of the master generation apparatus 50 according to the first embodiment. With reference to FIG. 6, the master generation apparatus 50 includes a master key pair generation unit 52, and a key storage unit 54.

The master key pair generation unit 52 may be a processor such as a central processing unit (CPU), for example, and generates a pair of a master private key KMs and a master public key KMp for identity-based cryptography.

Identity-based cryptography is a type of public-key cryptography. Differing from the public key infrastructure (PKI), in which a certificate for guaranteeing the authenticity of a public key generated by a user himself/herself is necessary, identification information of a user (or user device) is used in place of a public key in identity-based cryptography. Thus, in identity-based cryptography, the distribution and management of information corresponding to a public key is easy, and no certificate is necessary to guarantee the authenticity of identification information. A master private key is a key (also referred to as "master key") for generating individual private keys corresponding to pieces of identification information, and needs to be managed confidentially. A master public key is a key (also referred to as "system parameter set") used to generate pieces of encrypted data that can be decrypted using the individual private keys.

In the present embodiment, the identification information IDp unique to each remanufactured cartridge 10 is used as identification information for identity-based cryptography. The master private key KMs is necessary to generate the authentication private key KIDs based on the identification information IDp. The master public key KMp is used by the printer 100 for the remanufacture authentication, which is for confirming that the remanufactured cartridge 10 has a legitimate authentication private key KIDs.

The master key pair generation unit 52 generates the master private key KMs and the master public key KMp according to formula (1) below. $\left(KMs, KMp\right) = Setup \left(k\right)$ (1)

The Setup algorithm receives a security parameter k as input, and returns a master private key KMs and a master public key KMp. The security parameter k is a variable that defines the key space (bit length, etc.) of the private key to be generated, and may be set in accordance with the desired security strength.

The master private key KMs generated by the master key pair generation unit 52 is provided to the management server 300 via a secure communication path (or in an offline fashion), and is managed confidentially by the later-described key management unit 315. The master public key KMp generated by the master key pair generation unit 52 is stored in the key storage unit 54. The key storage unit 54 may be a storage device that includes a non-volatile memory. During manufacturing of the printer 100, the manufacturer of the printer 100 incorporates the master public key KMp stored in the key storage unit 54 into the later-described encryption processing unit 123 of the printer 100.

### 2-3. Example Configuration of Cartridge

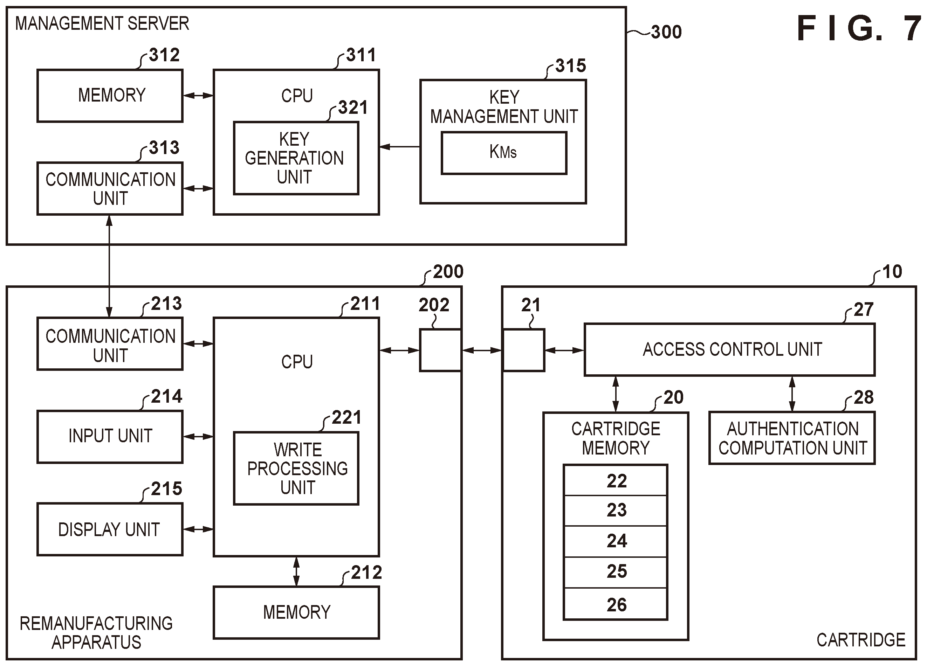

FIG. 7 illustrates a connection relationship between the cartridge 10, the remanufacturing apparatus 200, and the management server 300 during remanufacturing of the cartridge 10 by the remanufacturer in the first embodiment, and an example of configurations of the respective apparatuses in the first embodiment.

The cartridge 10 includes the cartridge memory 20, the connection terminals 21, an access control unit 27, and an authentication computation unit 28. The cartridge memory 20 is a storage medium that has storage areas that are configured as described with reference to FIG. 5. The connection terminals 21 provide electrical connection with the connection terminals 202 of the remanufacturing apparatus 200.

The access control unit 27 is a controller that, based on commands received from the remanufacturing apparatus 200, controls the reading and writing of data from and to the cartridge memory 20. For example, in response to a read command designating an address of a storage area of the cartridge memory 20 from which the reading of data by external apparatuses is permitted, the access control unit 27 reads data from the designated address and transmits the read data to the remanufacturing apparatus 200. Furthermore, in response to a write command designating an address of a storage area of the cartridge memory 20 to which the writing of data by external apparatuses is permitted, the access control unit 27 writes data to the designated address.

The authentication computation unit 28 is a processing circuit that performs computation relating to the basic authentication and the remanufacture authentication of the cartridge 10 in response to instructions from the access control unit 27. For example, the authentication computation unit 28 performs hash computation or other authentication-related computation for using the basic authentication key to calculate an authentication response value from an authentication value received from the printer 100 in the basic authentication. Furthermore, as described later, the authentication computation unit 28 performs decryption computation for using the authentication private key to decrypt encrypted data included in a remanufacture authentication request received from the printer 100 in the remanufacture authentication.

### 2-4. Example Configuration of Remanufacturing Apparatus

The remanufacturing apparatus 200 includes the connection terminals 202, a CPU 211, a memory 212, a communication unit 213, an input unit 214, and a display unit 215. The connection terminals 202 provide electrical connection between the connection terminals 202 and the connection terminals 21 of the cartridge 10.

The CPU 211 is a controller that controls the overall operation of the remanufacturing apparatus 200 by executing one or more computer programs. The memory 212 stores therein the computer programs executed by the CPU 211. The communication unit 213 is a communication interface that allows the remanufacturing apparatus 200 to communicate with the management server 300 via the network N1. The input unit 214 is an input device that allows the remanufacturing apparatus 200 to receive user input. The display unit 215 is a display for displaying information to the user of the remanufacturing apparatus 200.

In the present embodiment, the CPU 211 functions as a write processing unit 221 that, during remanufacturing of the cartridge 10, acquires remanufacture data and remanufacture authentication data for the cartridge 10 after remanufacture and writes the acquired remanufacture data and remanufacture authentication data to the cartridge memory 20. Further description of the flow of processing executed by the write processing unit 221 will be provided later.

### 2-5. Example Configuration of Management Server

The management server 300 includes a CPU 311, a memory 312, a communication unit 313, and the key management unit 315.

The CPU 311 is a controller that controls the overall operation of the management server 300 by executing one or more computer programs. The memory 312 stores therein the computer programs executed by the CPU 311. The communication unit 313 is a communication interface that allows the management server 300 to communicate with other apparatuses via the network N1. The key management unit 315 may be a tamper-resistant storage device, and confidentially manages the master private key KMs generated by the master generation apparatus 50. The master private key KMs can only be read by the key generation unit 321. While not illustrated in FIG. 7, the management server 300 may further include an input device for receiving user input and a display for displaying information.

In the present embodiment, the CPU 311 functions as a key generation unit 321 that, during remanufacturing of the cartridge 10, generates an authentication private key in accordance with a key generation request received from the remanufacturing apparatus 200. Further description of the operation of the key generation unit 321 in the write processing will be provided later.

### 2-6. Flow of Write Processing

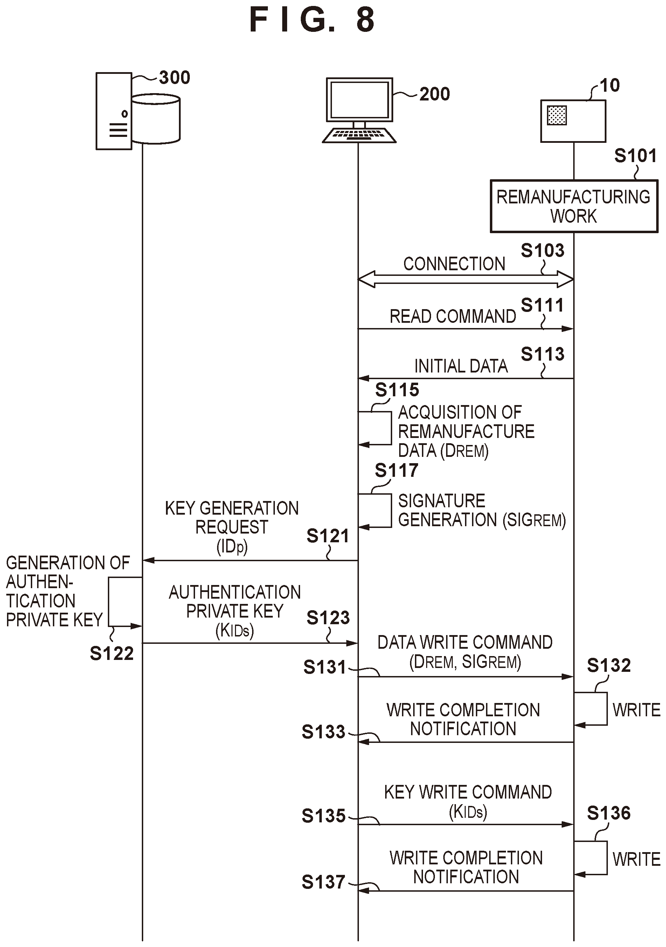

FIG. 8 is a sequence diagram illustrating an example of a flow of the write processing executed during remanufacturing of the cartridge 10 in the present embodiment. The cartridge 10, the remanufacturing apparatus 200, and the management server 300 are mainly involved in the write processing illustrated in FIG. 8. Note that, in the following description, "S" (capital S) is an abbreviation for "processing step".

Prior to the write processing, in step S101, the remanufacturer carries out work for remanufacturing, such as cleaning the cartridge 10, refilling the cartridge 10 with toner, and replacing components. Once the work is complete, in step S103, the remanufacturer connects the cartridge 10 to the connection interface 201 of the remanufacturing apparatus 200. Then, the write processing is started by the write processing unit 221 as a result of the CPU 211 of the remanufacturing apparatus 200 launching a computer program.

In step S111, the write processing unit 221 transmits, to the cartridge 10, a read command for reading the initial data stored in the initial-data area 22 of the cartridge memory 20. In step S113, the access control unit 27 of the cartridge 10 transmits, to the remanufacturing apparatus 200, the initial data read from the initial-data area 22. Note that, in steps S111 to S113, the history data may be read from the cartridge memory 20 together with the initial data. Furthermore, if the cartridge 10 has already been remanufactured in the past, remanufacture data relating to the remanufacturing carried out in the past may be further read from the cartridge memory 20.

Next, in step S115, the write processing unit 221 acquires remanufacture data DREM to be used by the printer 100 to which the cartridge 10 after remanufacture (the current remanufacturing) is attached. For example, the remanufacture data DREM includes characteristics information indicating the characteristics of the toner and components of the cartridge 10 after remanufacture. For example, the remanufacture data DREM may be received via a user interface provided by the display unit 215 and the input unit 214 of the remanufacturing apparatus 200, or may be received (e.g., in the form of a data file) from some external apparatus via the communication unit 213. Next, in step S117, the write processing unit 221 generates a digital signature SIGREM for the remanufacture data DREM acquired in step S115.

Next, in step S121, the write processing unit 221 transmits, to the management server 300, a key generation request that is a request to generate an authentication private key using the identity-based cryptography scheme. The key generation request includes the identification information IDp, which is at least partially constituted from the unique data in the remanufacture data acquired in step S115. Next, in step S122, in response to the key generation request from the remanufacturing apparatus 200, the key generation unit 321 of the management server 300 generates the authentication private key KIDs according to formula (2) below based on the identification information IDp and the master private key KMs held by the key management unit 315. $KIDs = Extract \left(KMs, IDp\right)$ (2)

The Extract algorithm receives the master private key KMs and the identification information IDp as input, and returns the authentication private key KIDs. Next, in step S123, the key generation unit 321 transmits the authentication private key KIDs generated in step S122 to the remanufacturing apparatus 200. The write processing unit 221 of the remanufacturing apparatus 200 receives, from the management server 300, the authentication private key KIDs generated using the identity-based cryptography scheme.

Next, in step S131, the write processing unit 221 transmits, to the cartridge 10, a data write command that is a request to write the remanufacture data DREM and the digital signature SIGREM to the remanufacture-data area 25 of the cartridge memory 20. The data write command is received by the access control unit 27 of the cartridge 10. In step S132, the access control unit 27 writes, to the remanufacture-data area 25, the remanufacture data DREM and the digital signature SIGREM received together with the data write command. Next, in step S133, the access control unit 27 transmits a write completion notification to the remanufacturing apparatus 200.

Next, in step S135, the write processing unit 221 transmits, to the cartridge 10, a key write command that is a request to write the authentication private key KIDs to the remanufacture-authentication-data area 26 of the cartridge memory 20. The key write command is received by the access control unit 27 of the cartridge 10. In step S136, the access control unit 27 writes, to the remanufacture-authentication-data area 26, the authentication private key KIDs received together with the key write command. Next, in step S137, the access control unit 27 transmits a write completion notification to the remanufacturing apparatus 200.

Note that the processing steps illustrated in FIG. 8 may be executed in an order different from the illustrated order. The same applies to the processing steps in other sequence diagrams. For example, the acquisition of the remanufacture data in step S115 may be executed at a timepoint earlier than the connection of the cartridge 10 to the remanufacturing apparatus 200 in step S103.

As could be understood from the above description, in the present embodiment, the unique data at least partially constituting the identification information, which is a material for generating the authentication private key KIDs using the identity-based cryptography scheme, does not exist in the cartridge memory 20 until the remanufacture data is written. As a matter of course, the authentication private key KIDs also does not exist in the cartridge memory 20 until the cartridge 10 is remanufactured. Accordingly, even if an attacker attempting to carry out malicious activities by exploiting the remanufacture framework of the cartridge 10 analyzes data in the cartridge memory 20 of the cartridge 10 when new in any way, it would be impossible to obtain any effective knowledge for malicious activities. Thus, the manufacturer of the cartridge 10 and the printer 100 does not have to generate in advance and confidentially manage many authentication private keys for the remanufacture authentication of many cartridges 10 when manufacturing new cartridges 10.

### 2-7. Example Configuration of Printer

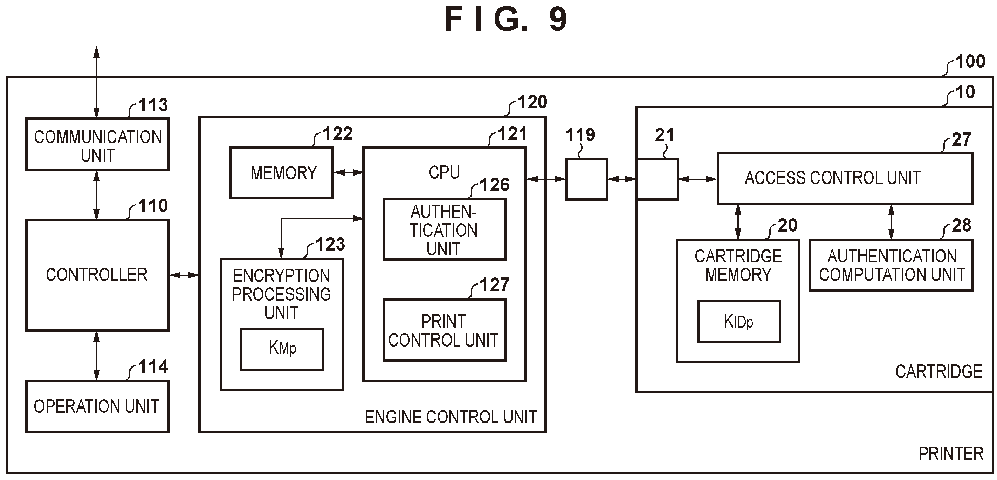

FIG. 9 illustrates an example of a control-function-related configuration of the printer 100 having the cartridge 10 after remanufacture attached thereto in the present embodiment. With reference to FIG. 9, the printer 100 includes, in addition to the cartridge 10, the controller 110, a communication unit 113, an operation unit 114, and the engine control unit 120.

The controller 110 includes a CPU and a memory, for example, and controls the overall operation of the printer 100 by executing one or more computer programs stored in the memory. The communication unit 113 is a communication interface that allows the printer 100 to communicate with other apparatuses via the network N1. The operation unit 114 provides the user of the printer 100 with a user interface. For example, the operation unit 114 may include input devices such as a touch panel, buttons, and/or switches, and output devices such as a display and/or a speaker. For example, the controller 110 causes the engine control unit 120 to execute an image forming job (e.g., a print job or a copy job) that is received from a host computer (unillustrated) or received via the operation unit 114.

The engine control unit 120 includes a CPU 121, a memory 122, and the encryption processing unit 123. The CPU 121 functions as an authentication unit 126 and a print control unit 127 by executing one or more computer programs stored in the memory 122.

The authentication unit 126 is an authentication processor that, upon attachment of the cartridge 10 to the printer 100, performs the basic authentication for verifying the basic authenticity of the cartridge 10. If the basic authentication fails, the authentication unit 126 prohibits the use of the cartridge 10. Furthermore, the authentication unit 126 determines whether or not the cartridge 10 has been remanufactured based on remanufacture data read from the remanufacture-data area 25 of the cartridge memory 20. If it is determined that the cartridge 10 has been remanufactured, the authentication unit 126 executes the remanufacture authentication for verifying that the remanufacture data is data having been written by a legitimate remanufacturer. If the remanufacture authentication is successful, the authentication unit 126 permits the print control unit 127 to execute image forming jobs using the remanufacture data. On the other hand, if the remanufacture authentication fails, the authentication unit 126 prohibits the use of the remanufacture data.

The print control unit 127 is a controller that, if an instruction to execute an image forming job is provided from the controller 110, controls the units of the printer 100 to form an image on a sheet. If the attached cartridge 10 is a cartridge prior to remanufacture, the print control unit 127 determines the image forming conditions using characteristics information read from the initial-data area 22 of the cartridge memory 20. If the attached cartridge 10 is a remanufactured cartridge and the remanufacture authentication is successful, the print control unit 127 determines the image forming conditions using characteristics information included in the remanufacture data read from the remanufacture-data area 25. Thus, the printer 100 can form an image with excellent quality based on the image forming conditions matching the characteristics of the remanufactured cartridge.

The encryption processing unit 123 is an encryption processing means that includes a processing circuit that performs encryption processing relating to the authentication of the cartridge 10, and a storage circuit that holds one or more encryption keys that are necessary for the encryption processing. In the present embodiment, the encryption processing unit 123 holds the master public key KMp corresponding to the master private key KMs generated by the master generation apparatus 50. The master public key KMp is used for the remanufacture authentication performed when the cartridge 10 is a remanufactured cartridge. While not illustrated in FIG. 9, the encryption processing unit 123 may further hold an encryption key to be used for the basic authentication of the cartridge 10.

### 2-8. Flow of Cartridge Authentication Processing

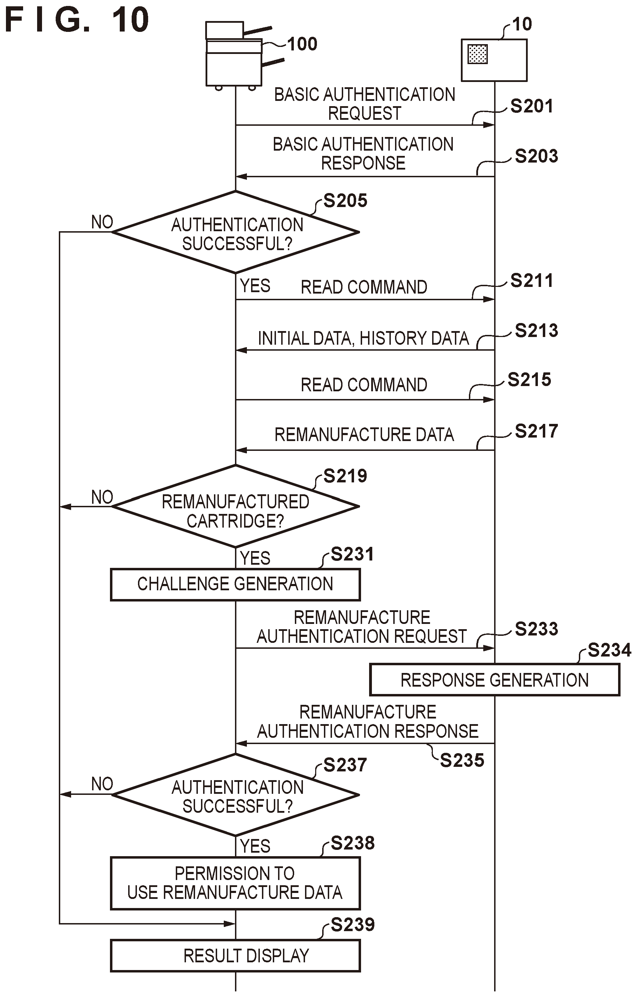

FIG. 10 is a sequence diagram illustrating an example of a flow of cartridge authentication processing executed between the cartridge 10 and the printer 100 in the present embodiment. The cartridge authentication processing illustrated in FIG. 10 is started when the attachment of the cartridge 10 to the printer 100 has been detected.

First, in step S201, the authentication unit 126 of the printer 100 transmits a basic authentication request (second authentication request) to the cartridge 10. The basic authentication request may include a challenge or another authentication value generated by the encryption processing unit 123. When the basic authentication request is received, the access control unit 27 of the cartridge 10 generates a basic authentication response based on the basic authentication request and the basic authentication key read from the basic-authentication-data area 24. In step S203, the access control unit 27 transmits the generated basic authentication response (second authentication response) to the printer 100. The basic authentication response may include an authentication response value calculated by the authentication computation unit 28 using the authentication value included in the basic authentication request and the basic authentication key. The basic authentication may be carried out in accordance with any appropriate known authentication method, and detailed description thereof is thus omitted here.

In step S205, the authentication unit 126 determines whether the basic authentication is successful or not based on the authentication response value included in the basic authentication response received from the cartridge 10. If the basic authentication is successful, the cartridge authentication processing advances to the reading of data from the cartridge 10 in and following step S211. If the basic authentication fails, the use of the cartridge 10 is prohibited, and the cartridge authentication processing advances to step S239.

In step S211, the authentication unit 126 transmits, to the cartridge 10, a read command for reading the initial data and the history data from the cartridge memory 20. In step S213, the access control unit 27 of the cartridge 10 transmits, to the printer 100, the initial data and the history data read from the initial-data area 22 and the history-data area 23, respectively. Furthermore, in step S215, the authentication unit 126 transmits, to the cartridge 10, a read command for reading the remanufacture data from the cartridge memory 20. In step S217, the access control unit 27 transmits, to the printer 100, the remanufacture data read from the remanufacture-data area 25. The remanufacture data includes unique data constituting the identification information IDp unique to the remanufactured cartridge 10, and the characteristics information for the image forming operation by the printer 100 having the remanufactured cartridge 10 attached thereto. The access control unit 27 may transmit, to the printer 100, the digital signature SIGREM proving the authenticity of the remanufacture data together with the remanufacture data. Note that, if the cartridge 10 has never been remanufactured, the access control unit 27 may respond in step S217 by notifying the printer 100 that the remanufacture data does not exist.

Next, in step S219, the authentication unit 126 determines whether the cartridge 10 is a new cartridge or a remanufactured cartridge based on the response from the cartridge 10. For example, the authentication unit 126 may determine that the cartridge 10 is new if no remanufacture data is received from the cartridge 10 or if the response from the cartridge 10 indicates that the cartridge 10 is new. If the cartridge 10 is a remanufactured cartridge, the cartridge authentication processing advances to the remanufacture authentication in and following step S231. If the cartridge 10 is new, the remanufacture authentication is skipped, and the cartridge authentication processing advances to step S239.

In step S231, the authentication unit 126 causes the encryption processing unit 123 to generate a challenge C for the remanufacture authentication using the identification information IDp at least partially constituted from the unique data in the remanufacture data. For example, the encryption processing unit 123 generates a random number Clng, and generates a challenge C based on the master public key KMp, the identification information IDp, and the random number Clng according to formula (3) below. $C = Encrypt \left(KMp, IDp+CIng\right)$ (3)

The Encrypt algorithm receives the master public key KMp and plaintext that is a concatenation of the identification information IDp and the random number Clng as input, and returns a challenge C, which is encrypted data. That is, the challenge C is generated by encrypting input that includes the random number Clng using the master public key KMp. Next, in step S233, the authentication unit 126 transmits, to the cartridge 10, a remanufacture authentication request (first authentication request) including the challenge C. The remanufacture authentication request is received by the access control unit 27 of the cartridge 10.

Next, in step S234, the access control unit 27 causes the authentication computation unit 28 to generate a response CDEC based on the challenge C included in the remanufacture authentication request and the authentication private key KIDs stored in the remanufacture-authentication-data area 26. For example, the authentication computation unit 28 generates the response CDEC according to formula (4) below. $Response CDEC = Decrypt \left(KIDs, C\right)$ (4)

The Decrypt algorithm receives the authentication private key KIDs and the challenge C, which is encrypted data, as input, and returns a response CDEC, which is decrypted data. That is, the response CDEC is generated by decrypting the challenge C using the authentication private key KIDs. Next, in step S235, the access control unit 27 generates a remanufacture authentication response (first authentication response) including the response CDEC, and transmits the generated remanufacture authentication response to the printer 100. The remanufacture authentication response is received by the authentication unit 126 of the printer 100.

In step S237, the authentication unit 126 determines whether the remanufacture authentication is successful or not based on the response CDEC included in the remanufacture authentication response received from the cartridge 10. For example, the authentication unit 126 determines that the remanufacture authentication is successful if the response CDEC is equal to the concatenation of the identification information IDp and the random number Clng used to generate the challenge C in step S231. On the other hand, if the response CDEC is not equal to the concatenation of the identification information IDp and the random number Clng, the authentication unit 126 determines that the remanufacture authentication has failed. The remanufacture authentication may further include verification of the authenticity of the remanufacture data based on the digital signature SIGREM.

If the remanufacture authentication is successful, in step S238, the authentication unit 126 permits the use of the remanufacture data read from the cartridge 10. In this case, the printer 100 can execute image forming jobs based on the image forming conditions determined based on the characteristics information included in the remanufacture data. If the remanufacture authentication fails, the use of the remanufacture data is prohibited. Then, the cartridge authentication processing advances to step S239.

In step S239, the authentication unit 126 displays, on a screen of the operation unit 114, the results of the basic authentication, the determination of remanufactured or not, and the remanufacture authentication. If the basic authentication or the remanufacture authentication has failed, a warning to the user may be displayed on the screen.

### 2-9. Summary of First Embodiment

In the first embodiment described in the present section, a device that is detachably attachable to an image forming apparatus is connected to an information processing apparatus of a remanufacturer during remanufacturing of the device. The device: receives, from the information processing apparatus, an authentication private key generated using an identity-based cryptography scheme based on identification information unique to the device after remanufacture; and writes the authentication private key to a memory storage area in the device from which reading by external apparatuses is prohibited. Upon attachment to an image forming apparatus after the device is remanufactured, the device: receives a first authentication request from the image forming apparatus; generates a first authentication response based on the first authentication request and the authentication private key in the memory; and returns the generated first authentication response. According to this configuration, the authentication private key for remanufacture authentication does not exist in the memory of the device until remanufacturing is performed. The first authentication response returned from the device in the remanufacture authentication includes data that dynamically changes, i.e., data that is different each time authentication is performed. Accordingly, device safety can be enhanced by reducing the opportunity of malicious use of data by an attacker attempting to conduct malicious activities through the duplication or analysis of data.

Furthermore, the authentication private key is generated by a server apparatus holding a master private key for the identity-based cryptography scheme in response to a key generation request from the information processing apparatus, and is written to the storage area. Accordingly, a manufacturer manufacturing new devices and the image forming apparatus does not have to generate in advance and confidentially manage many authentication private keys respectively unique to many devices. Furthermore, the image forming apparatus uses a master public key for the identity-based cryptography scheme to perform the remanufacture authentication of the device based on the first authentication request and the first authentication response. Thus, the image forming apparatus need not confidentially hold an encryption key for the remanufacture authentication. Accordingly, the risk of leakage of the authentication private key and the cost for key management can be reduced.

Furthermore, the device receives, from the information processing apparatus, and writes, to the memory, remanufacture data including characteristics information for an image forming operation by the image forming apparatus to which the device is attached after remanufacture. The use of the characteristics information by the image forming apparatus is permitted only if the remanufacture authentication of the device is successful. In such a manner, the image forming apparatus is prevented from operating based on information the authenticity of which is not guaranteed.

Furthermore, the image forming apparatus transmits the first authentication request to the device attached thereto if it is determined that the device has been remanufactured based on data read from the memory of the device. Accordingly, the remanufacture authentication using the authentication private key is not required for a new device. However, basic authentication that is separate from the remanufacture authentication may be performed regardless of whether the device is new or has been remanufactured, and, by performing authentication in multiple stages in such a manner, the safety relating to remanufacturable devices can be further enhanced.

### 3. Second Embodiment

In the above-described first embodiment, the server apparatus that manages the master private key and generates the authentication private key is the root of trust of data written to the memory of a remanufactured cartridge or the remanufacturer that writes the data to the memory of the remanufactured cartridge. In a second embodiment described in the present section, in order to add a further root of trust, certificate data is additionally written to the memory of a new cartridge when the cartridge is manufactured.

As was the case in the first embodiment, the cartridge authentication system 1 includes the cartridge 10, the master generation apparatus 50, the printer 100, the remanufacturing apparatus 200, and the management server 300 in the second embodiment as well. The cartridge 10 is a device that is detachably attachable to the printer 100. However, the cartridge 10 includes a cartridge memory 30 in place of the cartridge memory 20.

### 3-1. Example Configuration of Cartridge Memory

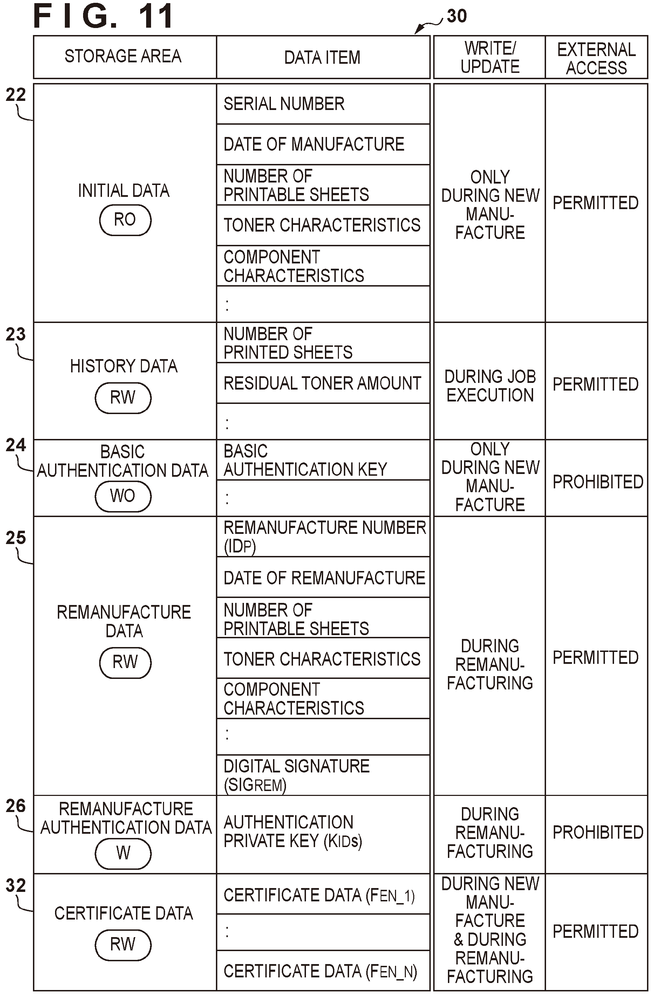

FIG. 11 is a diagram for describing an example of a configuration of storage areas of the cartridge memory 30 according to the second embodiment. The cartridge memory 30 may be a non-volatile memory of any appropriate type, and may be an EEPROM, for example. With reference to FIG. 11, the cartridge memory 30 includes the initial-data area 22, the history-data area 23, the basic-authentication-data area 24, the remanufacture-data area 25, the remanufacture-authentication-data area 26, and a certificate-data area 32.

The certificate-data area (fourth storage area) 32 is a storage area to which is written in advance an encrypted certificate generated by encrypting an electronic certificate proving the authenticity of the initial data written to the initial-data area 22. The certificate-data area 32 is rewritable ("RW"), meaning that the reading and writing of data from and to the certificate-data area 32 is permitted. The certificate-data area 32 is configured to be accessible from external apparatuses.

In the present embodiment, N encrypted certificates FEN_1 to FEN_N generated by respectively encrypting N electronic certificates proving the authenticity of the initial data are written in advance to the certificate-data area 32. Here, N is an integer of 2 or more. The encrypted certificates FEN_1 to FEN_N are generated by the master generation apparatus 50 and written to the certificate-data area 32 when the cartridge 10 is newly manufactured. Furthermore, during the n^{th} remanufacturing of the cartridge 10, the n^{th} encrypted certificate FEN_n is read from the certificate-data area 32 to be subjected to certificate verification by the management server 300. If the certificate verification is successful, the encrypted certificate FEN_n in the certificate-data area 32 is overwritten with an n^{th} electronic certificate FDE_n restored by decrypting the encrypted certificate FEN_n.

### 3-2. Example Configuration of Master Generation Apparatus

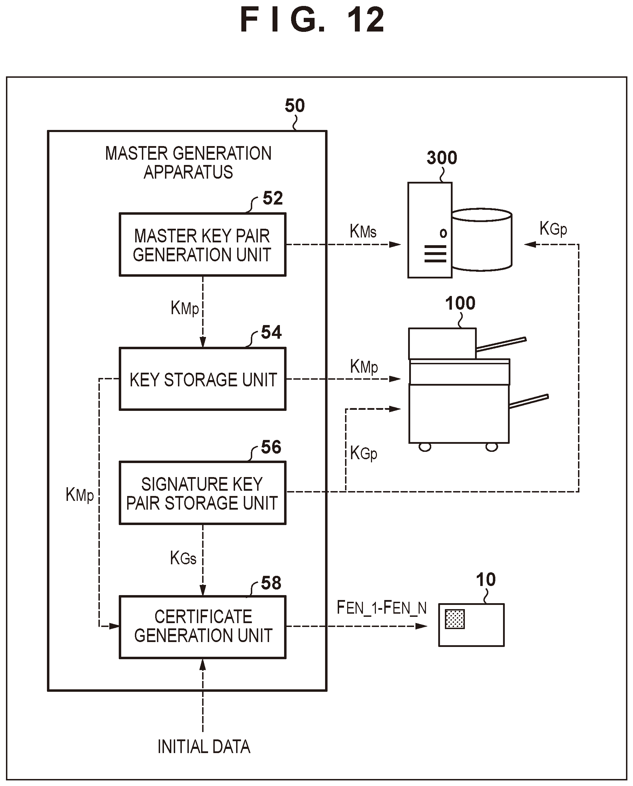

FIG. 12 illustrates an example of a detailed configuration of the master generation apparatus 50 according to the second embodiment. With reference to FIG. 12, the master generation apparatus 50 includes the master key pair generation unit 52, the key storage unit 54, a signature key pair storage unit 56, and a certificate generation unit 58.

The signature key pair storage unit 56 is a storage device storing therein a pair of a signature key KGs to be used to generate the N electronic certificates described above for a new cartridge 10, and a corresponding signature verification key KGp. For example, the pair of the signature key KGs and the signature verification key KGp may be a pair of a private key and a public key for an appropriate public-key cryptography scheme such as the Rivest-Shamir-Adleman (RSA) cryptosystem or the Edwards-curve Digital Signature Algorithm (EdDSA) cryptosystem. The signature verification key KGp is managed by the later-described key management unit 331 of the management server 300. Furthermore, the signature verification key KGp is incorporated into an encryption processing unit 133 of the printer 100 together with the master public key KMp during manufacturing of the printer 100. The signature key KGs is used by the certificate generation unit 58 to generate electronic certificates.

The certificate generation unit 58 acquires initial data to be written to the initial-data area 22 of a new cartridge 10, and generates N electronic certificates (digital certificates) for proving the authenticity of the initial data. The value of the integer N may be the maximum permitted remanufacturing count of the cartridge 10. For example, the certificate generation unit 58 repeats certificate generation processing as shown in formula (5) below from n = 1 to n = N. $Fn = IDinit \left‖n\right‖ Sign \left(KGs, IDinit, n\right)$ (5)

In formula (5), the operator ∥ indicates data concatenation. The Sign function is a function that generates a digital signature for the initial identification information IDinit and the ordinal number n using the signature key KGs. That is, the n^{th} electronic certificate Fn is generated using at least the initial identification information included in the initial data and the ordinal number n indicating the remanufacturing count, and the signature key KGs stored in the signature key pair storage unit 56. Because the ordinal number n is a different numerical value for each of the N electronic certificates Fn, the N electronic certificates F1 to FN would include digital signatures that are different from one another.

Furthermore, the certificate generation unit 58 encrypts the N electronic certificates F1 to FN using the master public key KMp stored in the key storage unit 54, and thereby generates corresponding encrypted certificates FEN_1 to FEN_N. The N encrypted certificates FEN_1 to FEN_N generated in such a manner are written in advance to the above-described certificate-data area 32 of the cartridge memory 30 of the cartridge 10.

### 3-3. Example Configuration of Cartridge

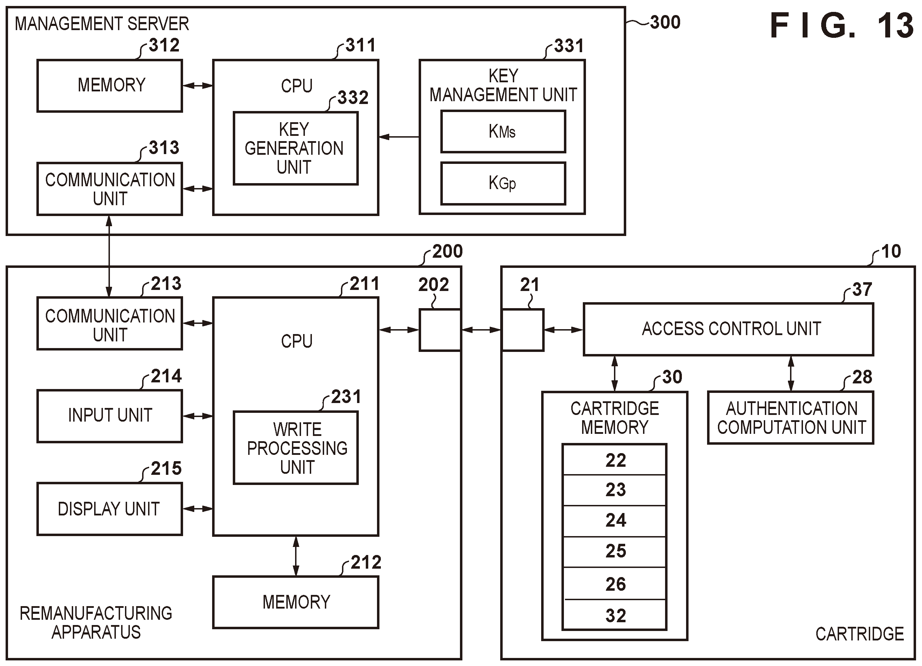

FIG. 13 illustrates a connection relationship between the cartridge 10, the remanufacturing apparatus 200, and the management server 300 during remanufacturing of the cartridge 10 by the remanufacturer in the second embodiment, and an example of configurations of the respective apparatuses in the second embodiment.

The cartridge 10 includes the cartridge memory 30, the connection terminals 21, an access control unit 37, and the authentication computation unit 28. The cartridge memory 30 is a storage medium that has storage areas that are configured as described with reference to FIG. 11.

As is the case with the access control unit 27 according to the first embodiment, the access control unit 37 is a controller that, based on commands received from the remanufacturing apparatus 200, controls the reading and writing of data from and to the cartridge memory 30. Write processing and cartridge authentication processing in which the access control unit 37 is involved will be described in detail later.

### 3-4. Example Configuration of Remanufacturing Apparatus

The remanufacturing apparatus 200 includes the connection terminals 202, the CPU 211, the memory 212, the communication unit 213, the input unit 214, and the display unit 215. In the present embodiment, the CPU 211 functions as a write processing unit 231 that, during remanufacturing of the cartridge 10, acquires remanufacture data and remanufacture authentication data for the cartridge 10 after remanufacture and writes the acquired remanufacture data and remanufacture authentication data to the cartridge memory 30.

### 3-5. Example Configuration of Management Server

The management server 300 includes the CPU 311, the memory 312, the communication unit 313, and the key management unit 331. The key management unit 331 may be a tamper-resistant storage device, and confidentially manages the master private key KMs generated by the master generation apparatus 50. Furthermore, the key management unit 331 manages the signature verification key KGp. In the present embodiment, the CPU 311 functions as a key generation unit 332 that, during remanufacturing of the cartridge 10, generates an authentication private key in accordance with a key generation request received from the remanufacturing apparatus 200.

During the n^{th} remanufacturing of the cartridge 10, the key generation unit 332, in response to a request from the remanufacturing apparatus 200, restores the n^{th} electronic certificate by decrypting the n^{th} encrypted certificate read from the cartridge memory 30 using the master private key KMs. Specifically, the key generation unit 332 can generate the authentication private key KIDs based on the master private key KMs and the identification information IDp of the cartridge 10 received from the remanufacturing apparatus 200, and decrypt the n^{th} encrypted certificate FEN_n using the generated authentication private key KIDs. Furthermore, the key generation unit 332 verifies the authenticity of the initial identification information of the cartridge 10 based on the restored n^{th} electronic certificate. Furthermore, if the certificate verification is successful, the key generation unit 332 provides the authentication private key associated with the n^{th} remanufacturing to the cartridge 10 via the remanufacturing apparatus 200.

In the present embodiment, if the certificate verification based on the encrypted certificate received from the cartridge 10 via the remanufacturing apparatus 200 is successful, the key generation unit 332 provides the restored electronic certificate to the cartridge 10 in addition to the authentication private key. The access control unit 37 of the cartridge 10 overwrites the n^{th} encrypted certificate in the certificate-data area 32 of the cartridge memory 30 with the restored electronic certificate received from the management server 300.

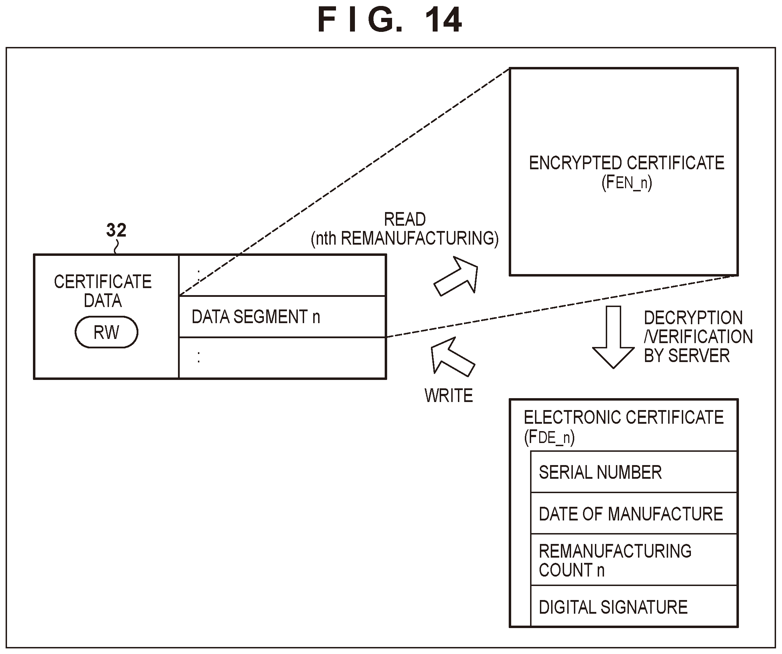

FIG. 14 is a diagram describing overwriting of certificate data in the certificate-data area 32 in the present embodiment. The n^{th} data segment in the certificate-data area 32 is illustrated in the left part of FIG. 14. Until the n^{th} remanufacturing of the cartridge 10, the encrypted certificate FEN_n illustrated in the upper right part of FIG. 14 is stored in the n^{th} data segment. Because the encrypted certificate FEN_n is encrypted, the encrypted certificate FEN_n cannot be used directly to verify the authenticity of the initial identification information. As described above, the key generation unit 332 of the management server 300 generates (restores) the n^{th} electronic certificate FDE_n by decrypting the n^{th} encrypted certificate FEN_n. For example, the electronic certificate FDE_n includes the serial number and the date of manufacture constituting the initial identification information, the ordinal number n indicating the remanufacturing count, and a digital signature proving the authenticity of such pieces of information. During the n^{th} remanufacturing of the cartridge 10, the content of the n^{th} data segment in the certificate-data area 32 of the cartridge memory 30 is overwritten with this electronic certificate FDE_n. Accordingly, during the period from the n^{th} remanufacturing of the cartridge 10 to the (n+1)^{th} remanufacturing of the cartridge 10, the printer 100 having the cartridge 10 attached thereto can read the electronic certificate FDE_n from the cartridge memory 30 and use the electronic certificate FDE_n to verify the cartridge 10.

### 3-6. Flow of Write Processing

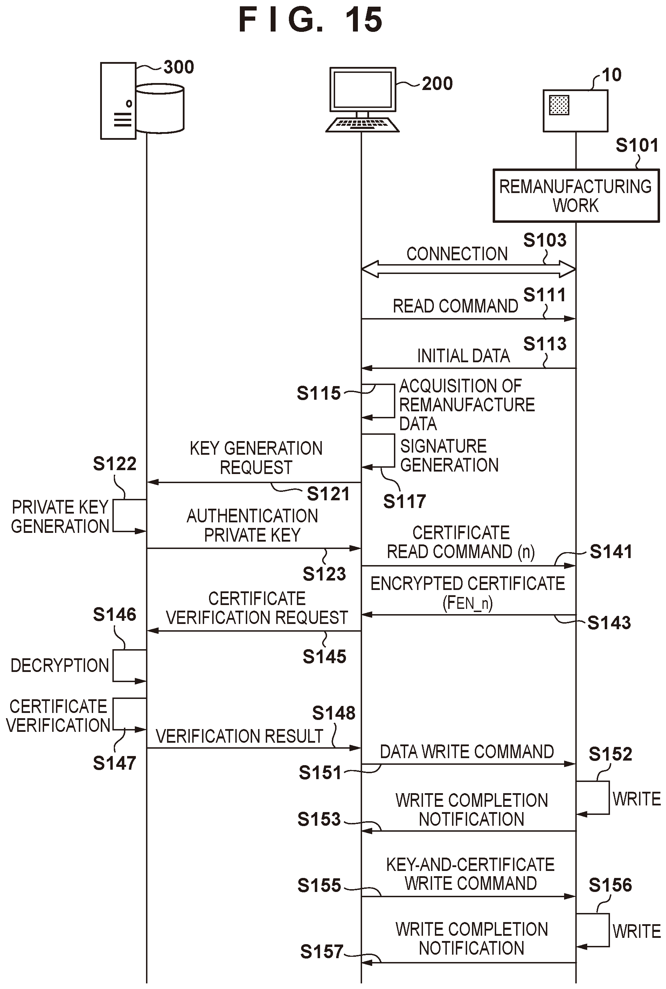

FIG. 15 is a sequence diagram illustrating an example of a flow of the write processing executed during remanufacturing of the cartridge 10 in the present embodiment. The cartridge 10, the remanufacturing apparatus 200, and the management server 300 are mainly involved in the write processing illustrated in FIG. 15.

Steps S101 to S123 of the write processing illustrated in FIG. 15 are the same processing steps as those that have been described with reference to FIG. 8, and description thereof is thus omitted here.

After receiving the authentication private key KIDs generated by the management server 300 in step S123, the write processing unit 231 of the remanufacturing apparatus 200 transmits, to the cartridge 10, a certificate read command for reading certificate data from the cartridge memory 30 in step S141. The certificate read command designates a remanufacturing count n. In step S143, the access control unit 37 of the cartridge 10 reads the n^{th} encrypted certificate FEN_n from the certificate-data area 32, and transmits the read encrypted certificate FEN_n to the remanufacturing apparatus 200.

Next, in step S145, the write processing unit 231 of the remanufacturing apparatus 200 transmits, to the management server 300, a certificate verification request including the initial identification information of the cartridge 10 and the encrypted certificate FEN_n. Next, in step S146, the key generation unit 332 of the management server 300, in response to the certificate verification request from the remanufacturing apparatus 200, generates (restores) the electronic certificate FDE_n by decrypting the encrypted certificate FEN_n using the authentication private key KIDs generated in step S122. Next, in step S147, the key generation unit 332 verifies the authenticity of the initial identification information of the cartridge 10 based on the signature verification key KGp and the digital signature included in the electronic certificate FDE_n. Next, in step S148, the key generation unit 332 notifies the remanufacturing apparatus 200 of the result of the certificate verification. The write processing unit 231 of the remanufacturing apparatus 200 receives the result of the certificate verification from the management server 300. If the certificate verification is successful, this notification includes the restored electronic certificate FDE_n.

Next, in step S151, the write processing unit 231 transmits, to the cartridge 10, a data write command that is a request to write the remanufacture data DREM and the digital signature SIGREM to the cartridge memory 30. In step S152, in response to the reception of the data write command, the access control unit 37 of the cartridge 10 writes, to the remanufacture-data area 25, the remanufacture data DREM and the digital signature SIGREM. Next, in step S153, the access control unit 37 transmits a write completion notification to the remanufacturing apparatus 200.

Next, in step S155, the write processing unit 231 transmits, to the cartridge 10, a key-and-certificate write command that is a request to write the authentication private key KIDs and the electronic certificate FDE_n to the cartridge memory 30. In step S156, in response to the reception of the key-and-certificate write command, the access control unit 37 writes the authentication private key KIDs and the electronic certificate FDE_n to the remanufacture-authentication-data area 26 and the certificate-data area 32, respectively. Next, in step S157, the access control unit 37 transmits a write completion notification to the remanufacturing apparatus 200.

Note that, if the certificate verification by the management server 300 fails in step S147, steps S151 to S157 may be skipped, and the write processing in FIG. 15 may be cancelled. In this case, the authentication private key KIDs and the electronic certificate FDE_n are not written to the cartridge memory 30.

### 3-7. Example Configuration of Printer

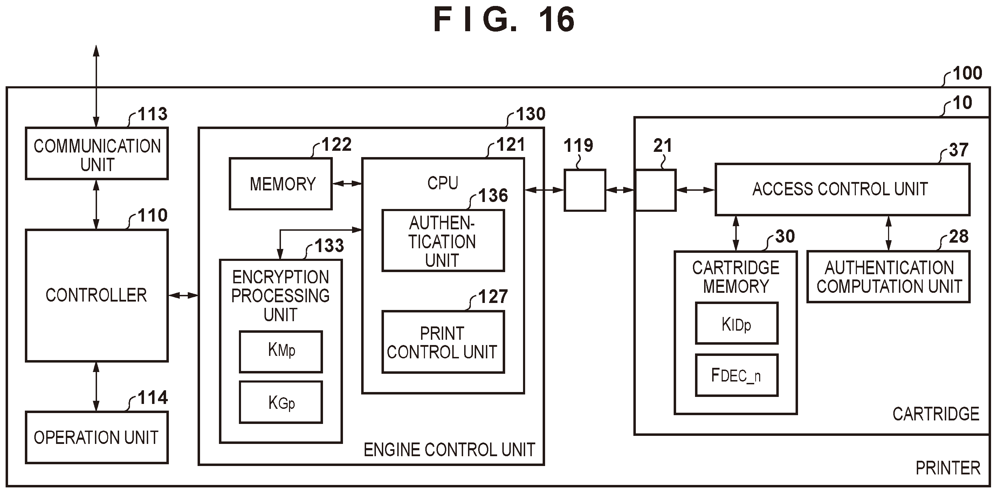

FIG. 16 illustrates an example of a control-function-related configuration of the printer 100 having the cartridge 10 after remanufacture attached thereto in the present embodiment. With reference to FIG. 16, the printer 100 includes, in addition to the cartridge 10, the controller 110, the communication unit 113, the operation unit 114, and an engine control unit 130.

The engine control unit 130 includes the CPU 121, the memory 122, and the encryption processing unit 133. The CPU 121 functions as an authentication unit 136 and the print control unit 127 by executing one or more computer programs stored in the memory 122.

The encryption processing unit 133 is an encryption processing means that includes a processing circuit that performs encryption processing relating to the authentication of the cartridge 10, and a storage circuit that holds one or more encryption keys that are necessary for the encryption processing. In the present embodiment, the encryption processing unit 133 holds the master public key KMp and the signature verification key KGp generated by the master generation apparatus 50. The master public key KMp is used for the remanufacture authentication performed when the cartridge 10 is a remanufactured cartridge. The signature verification key KGp is used for the certificate verification performed based on electronic certificates read from the cartridge memory 30. While not illustrated in FIG. 16, the encryption processing unit 133 may further hold an encryption key to be used for the basic authentication of the cartridge 10.

The authentication unit 136 is an authentication processor that, upon attachment of the cartridge 10 to the printer 100, performs the basic authentication of the cartridge 10 and the determination of whether or not the cartridge 10 has been remanufactured, similarly to the authentication unit 126 according to the first embodiment. Furthermore, in the present embodiment, for a remanufactured cartridge 10, the authentication unit 136 receives the initial identification information and the electronic certificate FDE_n read from the cartridge memory 30 from the cartridge 10, and instructs the encryption processing unit 133 to perform the certificate verification. The encryption processing unit 133 verifies the authenticity of the initial identification information of the cartridge 10 based on the signature verification key KGp and the digital signature included in the electronic certificate FDE_n. If it is determined that the initial identification information is authentic, i.e., if the verification based on the electronic certificate FDE_n is successful, the authentication unit 136 transmits the remanufacture authentication request to the cartridge 10 and starts the remanufacture authentication, similarly to the authentication unit 126 according to the first embodiment. The authentication unit 136 permits the use of the remanufacture data by the print control unit 127 if the remanufacture authentication is successful, and prohibits the use of the remanufacture data by the print control unit 127 if the remanufacture authentication fails.

### 3-8. Flow of Cartridge Authentication Processing

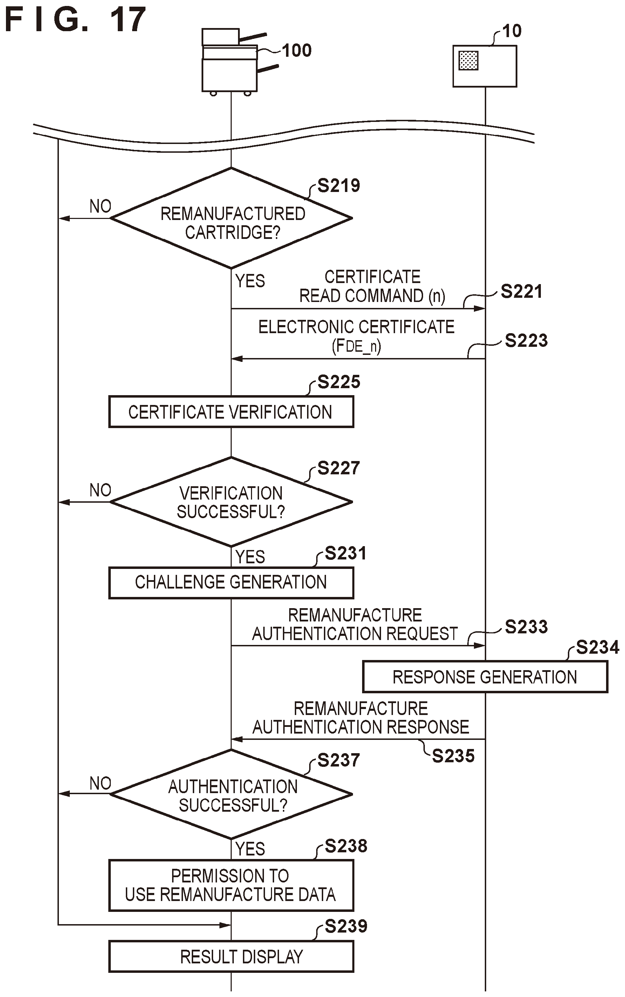

FIG. 17 is a sequence diagram illustrating an example of a flow of cartridge authentication processing executed between the cartridge 10 and the printer 100 in the present embodiment. The cartridge authentication processing illustrated in FIG. 17 is started when the attachment of the cartridge 10 to the printer 100 has been detected.

Note that, in the first half of the cartridge authentication processing, basic authentication (steps S201 to S205) and reading of data (steps S211 to S217) that are the same as those in the cartridge authentication processing in the first embodiment already described with reference to FIG. 10 are performed. However, such processing steps are omitted in FIG. 17 in order to avoid redundant description.

In step S219, the authentication unit 136 of the printer 100 determines whether the cartridge 10 is a new cartridge or a remanufactured cartridge based on the remanufacture data received from the cartridge 10. If the cartridge 10 is a remanufactured cartridge, the cartridge authentication processing advances to the certificate verification in and following step S221. If the cartridge 10 is new, the certificate verification is skipped, and the cartridge authentication processing advances to step S239.

In step S221, the authentication unit 136 transmits, to the cartridge 10, a certificate read command for reading certificate data from the cartridge memory 30. The certificate read command designates a remanufacturing count n. In step S223, the access control unit 37 of the cartridge 10 transmits, to the printer 100, the n^{th} electronic certificate FDE_n read from the certificate-data area 32. In step S225, the encryption processing unit 133 executes verification of the electronic certificate FDE_n in accordance with an instruction from the authentication unit 136, and outputs the result of the verification to the authentication unit 136. The processing following this point branches depending on whether the certificate verification is successful or fails in step S227. If the certificate verification is successful, the cartridge authentication processing advances to the remanufacture authentication in and following step S231. If the certificate verification fails, the remanufacture authentication is skipped, and the cartridge authentication processing advances to step S239.

Steps S231 to S238 relating to the remanufacture authentication are the same processing steps as those that have been described with reference to FIG. 10, and description thereof is thus omitted here.

In step S239, the authentication unit 136 displays, on a screen of the operation unit 114, the results of the basic authentication, the determination of remanufactured or not, the certificate verification, and the remanufacture authentication. If the basic authentication, the certificate verification, or the remanufacture authentication has failed, a warning to the user may be displayed on the screen.

### 3-9. Summary of Second Embodiment

The authentication private key for remanufacture authentication does not exist in the memory of the device until remanufacturing is performed, also in the second embodiment described in the present section. Furthermore, the first authentication response returned from the device in the remanufacture authentication includes data that is different each time authentication is performed. Accordingly, device safety can be enhanced by reducing the opportunity of malicious use of data by an attacker attempting to conduct malicious activities through the duplication or analysis of data.

Furthermore, together with initial data including identification information of the device prior to remanufacture, encrypted data of an electronic certificate proving the authenticity of the initial data is written in advance to the memory of the device, and certificate verification is executed during remanufacturing by a server apparatus that can decrypt the encrypted data. Furthermore, if the certificate verification fails, the authentication private key for the remanufacture authentication is not provided to the device. By adding a root of trust of the remanufacturer that writes data to the memory of remanufacturable devices in such a manner, the safety relating to remanufacturable devices can be further enhanced.

Furthermore, the encrypted data written in advance to the memory of the device includes N (where N is an integer of 2 or more) encrypted certificates generated in advance based on N different numerical values. These numerical values may be ordinal numbers representing the remanufacturing count. According to such a configuration, for remanufacturing that can be performed up to N times, the certificate verification can be executed on an electronic certificate that changes each time remanufacturing is performed. Thus, the difficulty of duplication and analysis of data by an attacker increases to a further extent.

Furthermore, the certificate verification is executed not only during remanufacturing of the device but also by an image forming apparatus having the device after remanufacture attached thereto. Thus, protection against abnormal operations of the image forming apparatus based on information of which the authenticity is not guaranteed can also be strengthened.

### 4. Third Embodiment

In the previous section, an example was described in which the server apparatus performs certificate verification based on certificate data written in advance to the cartridge memory. In contrast, in the third embodiment described in the present section, it is the cartridge that executes certificate verification based on certificate data written in advance to the cartridge memory.

As was the case in the first embodiment, the cartridge authentication system 1 includes the cartridge 10, the master generation apparatus 50, the printer 100, the remanufacturing apparatus 200, and the management server 300 in the third embodiment as well. The cartridge 10 is a device that is detachably attachable to the printer 100. The cartridge 10 includes the cartridge memory 30, which is configured as described with reference to FIG. 11. Specifically, N encrypted certificates FEN_1 to FEN_N based on N electronic certificates proving the authenticity of the initial data written to the initial-data area 22 are written in advance to the certificate-data area 32 of the cartridge memory 30.

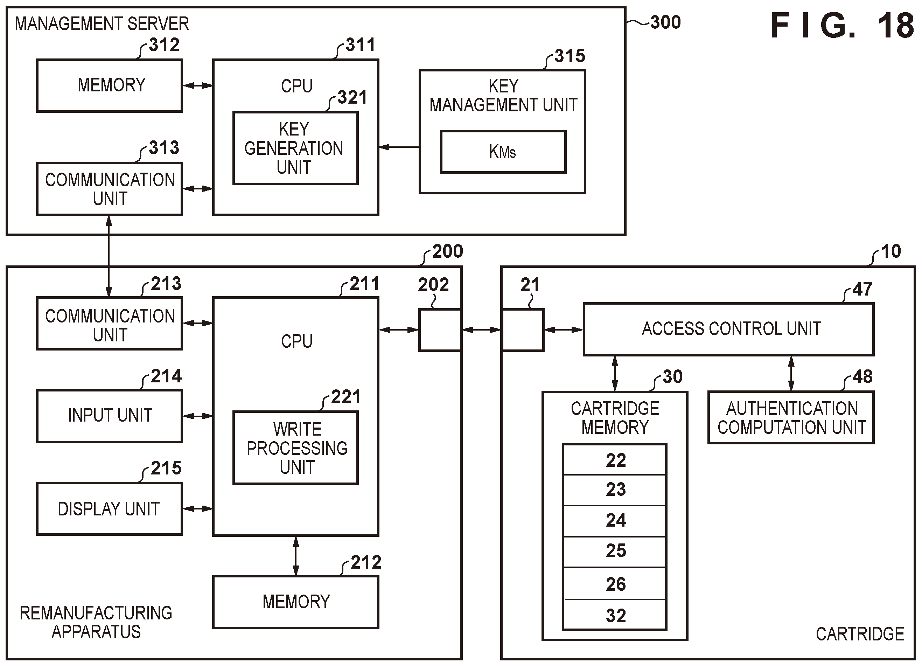

FIG. 18 illustrates a connection relationship between the cartridge 10, the remanufacturing apparatus 200, and the management server 300 during remanufacturing of the cartridge 10 by the remanufacturer in the third embodiment, and an example of configurations of the respective apparatuses in the third embodiment. The cartridge 10 includes the cartridge memory 30, the connection terminals 21, an access control unit 47, and an authentication computation unit 48. The remanufacturing apparatus 200 and the management server 300 may be configured in the same manner as in the first embodiment.

As is the case with the access control unit 27 according to the first embodiment, the access control unit 47 of the cartridge 10 is a controller that, based on commands received from the remanufacturing apparatus 200, controls the reading and writing of data from and to the cartridge memory 30. The authentication computation unit 48 is a processing circuit that performs computation relating to the basic authentication and the remanufacture authentication of the cartridge 10 in response to instructions from the access control unit 47.

During the n^{th} remanufacturing of the cartridge 10, the access control unit 47 restores the n^{th} electronic certificate FDE_n by decrypting the n^{th} encrypted certificate FEN_n using the authentication private key KIDs received from the remanufacturing apparatus 200. Furthermore, the access control unit 47 instructs the authentication computation unit 48 to perform certificate verification based on the restored electronic certificate FDE_n. The authentication computation unit 48 executes the certificate verification using the digital signature included in the electronic certificate FDE_n and the signature verification key KGp, which is a public key, and outputs the result of the verification to the access control unit 47. If the certificate verification is successful, the access control unit 47 writes the authentication private key KIDs to the remanufacture-authentication-data area 26 of the cartridge memory 30, and also overwrites the n^{th} encrypted certificate FEN_n in the certificate-data area 32 with the restored electronic certificate FDE_n.

The printer 100 may be configured in the same manner as in the second embodiment. Accordingly, upon attachment of the cartridge 10, the authentication unit 136 of the printer 100 executes the basic authentication, the determination of whether or not the cartridge 10 has been remanufactured, the certificate verification with respect to the electronic certificate read from the cartridge memory 30, and the remanufacture authentication. If the cartridge 10 has been remanufactured, the use of the remanufacture data read from the cartridge memory 30 is permitted when the basic authentication, the certificate verification, and the remanufacture authentication are successful, and the use of the remanufacture data is prohibited if any authentication or verification fails.

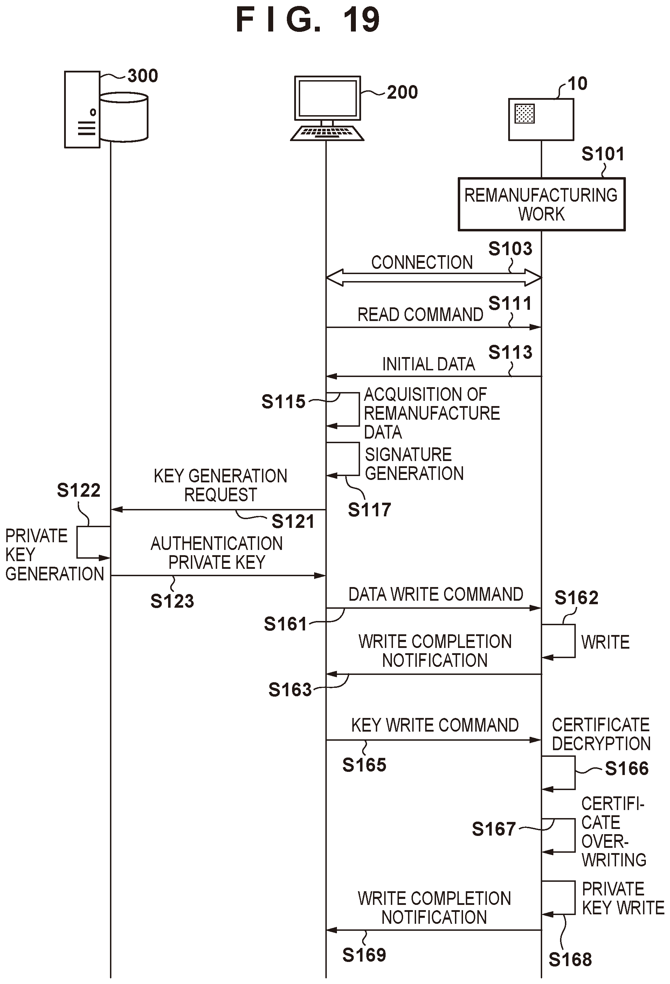

FIG. 19 is a sequence diagram illustrating an example of a flow of the write processing executed during remanufacturing of the cartridge 10 in the present embodiment. The cartridge 10, the remanufacturing apparatus 200, and the management server 300 are mainly involved in the write processing illustrated in FIG. 19.

Steps S101 to S123 of the write processing illustrated in FIG. 19 are the same processing steps as those that have been described with reference to FIG. 8, and description thereof is thus omitted here.

In step S123, the write processing unit 221 of the remanufacturing apparatus 200 receives the authentication private key KIDs generated by the management server 300. Next, in step S161, the write processing unit 221 transmits, to the cartridge 10, a data write command that is a request to write the remanufacture data DREM and the digital signature SIGREM to the remanufacture-data area 25 of the cartridge memory 30. In step S162, in response to the data write command, the access control unit 47 of the cartridge 10 writes, to the remanufacture-data area 25, the remanufacture data DREM and the digital signature SIGREM. Next, in step S163, the access control unit 47 transmits a write completion notification to the remanufacturing apparatus 200.

Next, in step S165, the write processing unit 221 transmits, to the cartridge 10, a key write command that is a request to write the authentication private key KIDs to the remanufacture-authentication-data area 26 of the cartridge memory 30. In step S166, in response to the key write command, the access control unit 47 reads the n^{th} encrypted certificate FEN_n from the certificate-data area 32, and restores the electronic certificate FDE_n by decrypting the read encrypted certificate FEN_n using the authentication private key KIDs. At this time, the access control unit 47 instructs the authentication computation unit 48 to perform certificate verification based on the restored electronic certificate FDE_n. Suppose that the certificate verification is successful here. Then, in step S167, the access control unit 47 overwrites the n^{th} encrypted certificate FEN_n in the certificate-data area 32 of the cartridge memory 30 with the restored electronic certificate FDE_n. Furthermore, in step S168, the access control unit 47 writes the authentication private key KIDs to the remanufacture-authentication-data area 26 of the cartridge memory 30. Then, in step S169, the access control unit 47 transmits a write completion notification to the remanufacturing apparatus 200.

Note that, if the certificate verification of the restored electronic certificate FDE_n fails in step S166, the overwriting of the encrypted certificate FEN_n with the electronic certificate FDE_n in step S167 and the writing of the authentication private key KIDs in step S168 are not executed, and a notification is provided of the result that verification has failed.

The authentication private key for remanufacture authentication does not exist in the memory of the device until remanufacturing is performed, also in the third embodiment described in the present section. Furthermore, the first authentication response returned from the device in the remanufacture authentication includes data that is different each time authentication is performed. Accordingly, device safety can be enhanced by reducing the opportunity of malicious use of data by an attacker attempting to conduct malicious activities through the duplication or analysis of data.

Furthermore, together with initial data including identification information of the device prior to remanufacture, encrypted data of an electronic certificate proving the authenticity of the initial data is written in advance to the memory of the device, and the electronic certificate is restored using an authentication private key received from the server apparatus via the remanufacturing apparatus. Furthermore, the writing of the authentication private key to the device is not executed if the verification of the restored electronic certificate fails. As a result of the writing of an unauthorized authentication key to the memory of a remanufacturable device being prevented in such a manner, the safety relating to remanufacturable devices can be further enhanced.

Furthermore, the certificate verification is executed not only during remanufacturing of the device but also by an image forming apparatus having the device after remanufacture attached thereto. Thus, protection against abnormal operations of the image forming apparatus based on information of which the authenticity is not guaranteed can also be strengthened.

### 5. Other Embodiments

The above-described embodiments can also be realized in a form of processing in which a program for realizing one or more functions is supplied to a system or an apparatus via a network or a storage medium, and one or more processors in the system or apparatus read and execute the program. Alternatively, the embodiments can be realized by a circuit (e.g., an ASIC) that realizes one or more functions.

The technique disclosed in the present description is capable of contributing to the realization of a sustainable society, such as a decarbonized society/circular economy.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A device (10) detachably attachable to an image forming apparatus (100), the device (10) comprising:
control means (27, 37, 47);
memory means (20, 30) that includes a first storage area (25) for which reading and writing by an external apparatus is permitted, and a second storage area (26) for which reading by an external apparatus is prohibited; and
connection interface means (21) configured to be connected to an information processing apparatus (200) during remanufacturing of the device (10),
wherein, in remanufacturing of the device (10), the control means (27, 37, 47) is configured to:
receive, from the information processing apparatus (200), remanufacture data including unique data at least partially constituting identification information that is unique to the device (10) after remanufacture;
write the received remanufacture data to the first storage area (25) of the memory means (20, 30);
receive, from the information processing apparatus (200), an authentication private key generated based on the identification information using an identity-based cryptography scheme; and
write the received authentication private key to the second storage area (26), and
upon attachment of the device (10) to the image forming apparatus (100), the control means (27, 37, 47) is further configured to:
receive a first authentication request from the image forming apparatus (100);
generate a first authentication response based on the first authentication request and the authentication private key; and
transmit the generated first authentication response to the image forming apparatus (100).

2. The device (10) according to claim 1, wherein
the authentication private key is generated by a server apparatus (300) in response to a key generation request from the information processing apparatus (200), the server apparatus (300) holding a master private key for generating the authentication private key.

3. The device (10) according to claim 2, wherein
the image forming apparatus (100) holds a master public key corresponding to the master private key, and
the master public key is used for authentication of the device (10) based on the first authentication request and the first authentication response.

4. The device (10) according to claim 3, wherein
the first authentication request includes encrypted data generated by encrypting input that includes a random number using the master public key, and
the control means (27, 37, 47) includes, in the first authentication response, decrypted data generated by decrypting the encrypted data using the authentication private key.

5. The device (10) according to any one of claims 1 to 4,
wherein the remanufacture data further includes characteristics information for an image forming operation by the image forming apparatus (100) to which the device (10) after remanufacture is attached, and
use of the characteristics information for the image forming operation is permitted only in a case where the authentication of the device (10) based on the first authentication request and the first authentication response is successful.

6. The device (10) according to any one of claims 1 to 5, wherein
the image forming apparatus (100) is further configured to, upon attachment of the device (10) to the image forming apparatus (100), transmit the first authentication request to the device (10) in a case where it is determined based on data read from the first storage area (25) that the device (10) has been remanufactured.

7. The device (10) according to any one of claims 1 to 6, wherein
the image forming apparatus (100) is further configured to, upon attachment of the device (10) to the image forming apparatus (100), transmit a second authentication request to the device (10) regardless of whether the device (10) is new or is remanufactured,
the control means (27, 37, 47) is further configured to transmit, to the image forming apparatus (100), a second authentication response corresponding to the second authentication request received from the image forming apparatus (100), and
the image forming apparatus (100) is further configured to transmit the first authentication request to the device (10) in a case where authentication of the device (10) based on the second authentication request and the second authentication response is successful.

8. The device (10) according to any one of claims 1 to 7, wherein
the memory means (20, 30) further includes a third storage area (22) to which initial data including initial identification information identifying the device (10) prior to remanufacture is written in advance, and
the unique data included in the remanufacture data constitutes the identification information unique to the device (10) after remanufacture in combination with the initial identification information, or independently constitutes the identification information unique to the device (10) after remanufacture.

9. The device (10) according to any one of claims 1 to 7, wherein
the memory means (20, 30) further includes a third storage area (22) to which initial data including initial identification information identifying the device (10) prior to remanufacture is written in advance, and a fourth storage area (32) to which is written in advance an encrypted certificate generated by encrypting an electronic certificate proving authenticity of the initial data,
in remanufacturing of the device (10), the initial data and the encrypted certificate are transmitted to a server apparatus (300) via the information processing apparatus (200), and
the control means (27, 37, 47) receives the authentication private key from the server apparatus (300) via the information processing apparatus (200) in a case where verification based on an electronic certificate restored by decrypting the encrypted certificate is successful in the server apparatus (300).

10. The device (10) according to claim 9, wherein
the fourth storage area (32) has written thereto in advance N, where N is an integer of 2 or more, encrypted certificates generated by respectively encrypting N electronic certificates proving the authenticity of the initial data,
an nth, where n = 1, ..., N, encrypted certificate is generated in advance based on the initial data and a numerical value that is different for each of the N electronic certificates,
in nth remanufacturing of the device (10), the initial data and the nth encrypted certificate are transmitted to the server apparatus (300) via the information processing apparatus (200), and
in a case where verification based on an electronic certificate restored by decrypting the nth encrypted certificate is successful in the server apparatus (300), the authentication private key associated with the nth remanufacturing is generated by the server apparatus (300) and received by the control means (27, 37, 47)from the server apparatus (300) via the information processing apparatus (200).

11. The device (10) according to claim 10, wherein
the numerical value that is different for each of the N electronic certificates is an ordinal number that indicates a remanufacturing count.

12. The device (10) according to any one of claims 9 to 11, wherein
the control means (27, 37, 47) is further configured to, in a case where the verification based on the electronic certificate restored by decrypting the encrypted certificate is successful in the server apparatus (300),
receive the electronic certificate from the server apparatus (300) via the information processing apparatus (200), and
write the received electronic certificate to the fourth storage area (32).

13. The device (10) according to claim 12, wherein
the control means (27, 37, 47) is further configured to overwrite the encrypted certificate in the fourth storage area (32), which was transmitted to the server apparatus (300), with the electronic certificate received from the server apparatus (300).

14. The device (10) according to any one of claims 1 to 7, wherein
the memory means (20, 30) further includes a third storage area (22) to which initial data including initial identification information identifying the device (10) prior to remanufacture is written in advance, and a fourth storage area (32) to which is written in advance an encrypted certificate generated by encrypting an electronic certificate proving authenticity of the initial data, and
the control means (27, 37, 47) is further configured to, in remanufacturing of the device (10),
restore the electronic certificate by decrypting the encrypted certificate using the authentication private key received from the information processing apparatus (200), and
write the authentication private key to the second storage area (26) in a case where verification based on the restored electronic certificate is successful.

15. The device (10) according to any one of claims 9 to 13, wherein
the control means (27, 37, 47) is further configured to, upon attachment of the device (10) to the image forming apparatus (100), transmit the initial data and certificate data read from the fourth storage area (32) to the image forming apparatus (100), and
the image forming apparatus (100) is further configured to transmit the first authentication request to the device (10) in a case where verification based on the certificate data is successful in the image forming apparatus (100).

16. A method that is executed by an information processing apparatus (200) connected to a device (10), for remanufacturing the device (10) detachably attachable to an image forming apparatus (100), the device (10) including memory means (20, 30) that includes a first storage area (25) for which reading and writing by an external apparatus is permitted, and a second storage area (26) for which reading by an external apparatus is prohibited, the method comprising:
acquiring remanufacture data including unique data at least partially constituting identification information that is unique to the device (10) after remanufacture;
transmitting the acquired remanufacture data to the device (10) to cause the device (10) to write the remanufacture data to the first storage area (25) of the memory means (20, 30);
transmitting a key generation request including the identification information to a server apparatus (300);
receiving, from the server apparatus (300), an authentication private key generated based on the identification information using an identity-based cryptography scheme; and
transmitting the received authentication private key to the device (10) to cause the device (10) to write the authentication private key to the second storage area (26) of the memory means (20, 30),
wherein, upon attachment of the device (10) to the image forming apparatus (100), the authentication private key written to the second storage area (26) is used by the device (10) to generate a first authentication response based on a first authentication request received from the image forming apparatus (100).

17. A computer program comprising instructions which, when the program is executed by a computer, cause the computer to carry out the method of claim 16.

18. An image forming apparatus (100) to which a device (10) is attached,
the device (10) including memory means (20, 30) that includes a first storage area (25) for which reading and writing by an external apparatus is permitted, and a second storage area (26) for which reading by an external apparatus is prohibited, and control means (27, 37, 47) that controls access to the memory means (20, 30),
remanufacture data including unique data at least partially constituting identification information that is unique to the device (10) after remanufacture being written to the first storage area (25) by an information processing apparatus (200) of a remanufacturer during remanufacturing of the device (10), and an authentication private key generated based on the identification information using an identity-based cryptography scheme being written to the second storage area (26) during remanufacturing of the device (10),
the image forming apparatus (100) comprising:
connection interface means (119) connectable to the device (10); and
authentication processing means (126, 136) configured to authenticate the device (10),
wherein the authentication processing means (126, 136) is further configured to, in a case where it is determined that the device (10) connected to the connection interface means (119) has been remanufactured:
transmit a first authentication request to the device (10);
receive, from the device (10), a first authentication response generated by the control means (27, 37, 47) based on the first authentication request and the authentication private key; and
permit the image forming apparatus (100) to use the remanufacture data read from the first storage area (25) of the memory means (20, 30), in a case where authentication of the device (10) based on the received first authentication response is successful.
